# EUROPÄISCHE PATENTSCHRIFT

(11) **EP 3 383 564 B1**
(45) Veröffentlichungstag und Bekanntmachung des Hinweises auf die Patenterteilung: **27.02.2019**
(21) Anmeldenummer: 16805091.2
(22) Anmeldetag: 30.11.2016
(51) Int. Cl.: B21J 15/02, B21D 39/03, B21J 15/28

(54) **VERFAHREN ZUR BESTIMMUNG DER QUALITÄT EINER FÜGEVERBINDUNG SOWIE STEUERVERFAHREN FÜR EIN VERBINDEN EINER MEHRZAHL VON BLECHEN MITHILFE EINER FÜGEVORRICHTUNG**
METHOD FOR DETERMINING THE QUALITY OF A JOINT, AND CONTROL METHOD FOR A PROCESS OF JOINING A PLURALITY OF METAL SHEETS BY MEANS OF A JOINING DEVICE
PROCÉDÉ DE DÉTERMINATION DE LA QUALITÉ D'UN RACCORDEMENT PAR ASSEMBLAGE AINSI QUE PROCÉDÉ DE COMMANDE POUR UN RACCORDEMENT D'UNE PLURALITÉ DE TÔLES À L'AIDE D'UN DISPOSITIF D'ASSEMBLAGE

(30) Priorität: 18.12.2015 DE 102015122255
(43) Veröffentlichungstag der Anmeldung: 10.10.2018
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); REHLING, Stefan, 31675 Bückeburg (DE)
(74) Vertreter: HWP Intellectual Property
(86) Internationale Anmeldenummer: PCT/EP2016/079332
(87) Internationale Veröffentlichungsnummer: WO 2017/102335

(56) Entgegenhaltungen:
- EP-A1- 1 946 864
- JP-A- 2007 203 307
- US-B2- 7 409 760

## Beschreibung

### 1. Gebiet der Erfindung

Die vorliegende Erfindung betrifft ein Verfahren zur Bestimmung der Qualität einer Fügeverbindung, die in einer Mehrzahl von Blechen mithilfe einer Fügevorrichtung hergestellt wird. Derartige Fügeverbindungen sind bspw. Stanznietverbindungen oder Clinch-Verbindungen, deren entsprechende Fügevorrichtungen bekannt sind. Des Weiteren betrifft vorliegende Erfindung ein Steuerverfahren für ein Verbinden einer Mehrzahl von Blechen mithilfe der Fügevorrichtung, die beispielgebend oben genannt worden sind.

### 2. Hintergrund der Erfindung

Das Herstellen von Fügeverbindungen bspw. durch Einbringen eines Stanzniets in eine Mehrzahl von Blechen oder durch Eindrücken eines Stempels ohne ein Fügeelement in eine Mehrzahl von Blechen ist allgemein bekannt. Zur Realisierung derartiger Fügeverbindungen werden Antriebselemente eingesetzt, die mithilfe von hydraulischen Systemen, elektromechanischen Systemen, pneumatischen Systemen oder ähnlichen angetrieben und somit bewegt werden. Zur Steuerung und Überwachung derartiger Fügevorgänge sind unterschiedliche Verfahren anwendbar.

DE 10 2012 025 047 A1 beschreibt bspw. ein Verfahren zum Überwachen eines mechanischen Fügeprozesses, insbesondere eines Stanzniet- oder Clinch-Prozesses. Zu diesem Zweck sind innerhalb eines Rahmens einer Fügevorrichtung ein Stempel und ein Niederhalter verschiebbar angeordnet. Der Niederhalter ist an den Stempel gekoppelt und in Fügerichtung des Stempels vorgespannt. Des Weiteren umfasst der Rahmen eine Matrize, in deren Richtung, der Fügerichtung, der Stempel bewegt wird. Um den Fügevorgang zu überwachen, werden die vom Stempel ausgeübte Stempelkraft, der Relativweg des Stempels mit Bezug auf den Niederhalter erfasst, um eine Fügekurve in Form der Stempelkraft als Funktion des Relativwegs aufzeichnen und darstellen zu können. Es sind somit zur Überwachung des Fügevorgangs zwei Wegsensoren für Stempel und Niederhalter und ein Kraftsensor als Mindestausstattung erforderlich. Diese müssen konstruktiv in den kompakten Setzkopf integriert werden und zudem über ein Datenerfassungssystem ausgelesen und deren Daten in einer auswertbaren Form präsentiert werden. Gerade die Integration der drei Mindestsensoren ist konstruktiv anspruchsvoll und nicht immer mit den Platzangeboten im Setzkopf sowie dem Anforderungsprofil an das Setzgerät vereinbar.

Der Stand der Technik offenbart zudem in WO 2014/025608 A1 eine Fügevorrichtung, bei der die Auswertung ohne die Verwendung der Erfassung der Stempelkraft realisiert wird. Diese Regelung des Setzgeräts basiert darauf, dass die Relativposition des Stempels und des Niederhalters in Bezug zueinander erfasst wird. In Abhängigkeit von dieser Relativposition zueinander kann beurteilt werden, ob eine Stanznietverbindung zufriedenstellend hergestellt worden ist. Zu diesem Zweck umfasst der Niederhalter einen Wegsensor, der die Position des Stempels relativ zum Niederhalter erfasst und zur Auswertung weiterleitet.

US 7,409,760 B2, auf der der Oberbegriff der Ansprüche 1 und 7 basiert, beschreibt ein elektromotorisch betriebenes Setzgerät, bei dem ein Elektromotor über ein Getriebe einen Stempel zum Herstellen einer Fügeverbindung bewegt. Um eine Echtzeitregelung des Fügevorgangs zu realisieren, wird zumindest ein erster Sensor eingesetzt, der eine elektrische Betriebsgröße des elektrischen Antriebs des Setzgeräts erfasst. Eine derartige Betriebsgröße ist bspw. das Drehmoment des Elektromotors oder sein Motorstrom oder auch seine Geschwindigkeit. Ergänzend dazu wird mithilfe zumindest eines zweiten Sensors eine charakteristische Größe für den Setzvorgang ermittelt. Zu diesen charakteristischen Größen zählen die bereits oben genannten Parameter zur Charakterisierung einer Fügeverbindung, wie bspw. die Setzkraft, eine Position des Stempels, die Nietgröße oder auch die Dicke des Werkstücks. Die mithilfe der Sensoren erfassten Größen werden im Rahmen einer Regelung in Echtzeit ausgewertet und gezielt verändert, um eine optimale Verbindung zu erzielen. Diese hier beschriebene Konstruktion und Verfahrensweise erfordert einen hohen Datenerfassungs- und Datenverarbeitungsaufwand. Denn die Fügeparameter, wie bspw. die Kraft des Stempels, sowie eine Steuergröße des Stempels, wie bspw. der Motorstrom, müssen in Echtzeit abgeglichen werden, um tatsächlich den Fügeprozess auf eine optimale Fügeverbindung einregeln zu können. Selbst wenn diese Echtzeitregelung durch einen hohen Qualitätsanspruch an die Fügeverbindung gerechtfertigt zu sein scheint, ist sie häufig nicht mit wirtschaftlichen Grenzen eines bereitzustellenden Setzgeräts vereinbar. Gemäß EP 1 946 864 A1 wird aus einem ermittelten Kraft-Weg-Verlauf eines Setzgeräts bestimmt, ob bspw. bei einem Stanznietvorgang die gewünschte Nietkopfendlage oder bei einem Clinch-Vorgang die gewünschte Restbodendicke erzielt worden ist. Grundlage dieser Steuer- und Auswerteverfahren bildet die Interpretation des Kraft-Weg-Verlaufs, der mithilfe eines Kraftsensors für die Kraft des Stempels und eines Wegsensors für den vom Stempel zurückgelegten Weg erfasst wird. Anhand dieses Kraft-Weg-Verlaufs ist erkennbar, wann bspw. der Stempel den Stanzniet gegen eine obere Blechlage drückt, so dass der Setzvorgang beginnen kann. Die hier offenbarte Steuerung und Auswertung basiert jedoch darauf, dass die Länge des gesetzten Niets bekannt ist. Nicht jeder Setzkopf lässt jedoch eine Bestimmung der Länge des verwendeten Fügeelements zu, so dass der Einsatz des hier beschriebenen Steuer- und Auswertverfahrens beschränkt ist.

Eine Verbindungsvorrichtung ist zudem beschrieben in JP 2007 203307 A. Die Verbindungsvorrichtung umfasst eine Steuereinrichtung, die eine Druckkraft, die auf zu verbindende Objekte von einer Klemmstange ausgeübt wird, mittels einer Klemm-Lastzelle erfasst und einen Klemm-Servomotor basierend auf der erfassten Druckkraft steuert, so dass die auf die zu verbindenden Objekte ausgeübte Druckkraft der Klemmstange einer vorbestimmten Kraft entspricht. Durch dieses Verfahren können die zu verbindenden Objekte durch die vorbestimmte Greifkraft ergriffen werden, unabhängig von der Position, an der die zu verbindenden Objekte angeordnet sind, unabhängig von der Dicke der zu verbindenden Objekte und unabhängig vom Vorhandensein eines Abstandes zwischen entsprechenden Verbindungsgliedern. Selbst wenn ein Niet tief eintaucht, werden die zu verbindenden Objekte nicht mit einer übermäßigen Kraft ergriffen. Als ein Ergebnis kann der Verbindungsvorgang in dem Zustand ausgeführt werden, in dem die zu verbindenden Objekte durch eine geeignete Greifkraft ergriffen wurden, und die Verbindungsqualität kann verbessert werden.

Es ist daher die Aufgabe vorliegender Erfindung, ein Verfahren zur Bestimmung der Qualität einer Fügeverbindung sowie ein Steuerverfahren für ein Setzgerät bereitzustellen, das in seiner Struktur ausreichend einfach gestaltet ist und gleichzeitig aber eine zufriedenstellende Herstellung und Auswertung von Fügeverbindungen gestattet.

### 3. Zusammenfassung der Erfindung

Die obige Aufgabe wird durch ein Verfahren zur Bestimmung der Qualität einer Fügeverbindung gemäß dem unabhängigen Patentanspruch 1 sowie durch ein Steuerverfahren für ein Verbinden einer Mehrzahl von Blechen mithilfe einer Fügevorrichtung gemäß dem unabhängigen Patentanspruch 7 gelöst. Vorteilhafte Ausgestaltungen und Modifikationen vorliegender Erfindung gehen aus den abhängigen Ansprüchen, der folgenden Beschreibung sowie den anhängenden Zeichnungen hervor.

Das erfindungsgemäße Verfahren zur Bestimmung der Qualität einer Fügeverbindung, die in einer Mehrzahl von Blechen mithilfe einer Fügevorrichtung hergestellt wird, die ein Antriebselement in Kombination mit einem damit bewegbaren Stempel und mit einem damit bewegbaren Niederhalter aufweist, umfasst die folgenden Schritte: Bewegen des Antriebselements in einer Fügerichtung, wobei das Antriebselement die Bewegung auf den Stempel sowie über mindestens eine erste und eine zweite Feder auf den Niederhalter überträgt, Erfassen einer durch das Antriebselement aufgebrachten Kraft mit einem ersten Sensor und eines durch das Antriebselement zurückgelegten Wegs mit einem zweiten Sensor während einer Bewegung des Antriebselements in und entgegen der Fügerichtung in Form eines Kraft-Weg-Verlaufs und nach Abschluss eines Fügevorgangs Vergleichen eines linearen Entlastungsbereichs im erfassten Kraft-Weg-Verlauf mit einer Referenzkurve der Fügevorrichtung, die als ein Referenz-Kraft-Weg-Verlauf beim Bewegen des Stempels und des Niederhalters über das Antriebselement zu und weg von einem Gegenlager ohne zwischengeordnete Bleche und ohne ein Fügeelement bestimmbar ist, wobei der Vergleich eine Bewertung einer Kopfendlage eines Fügelements oder einer Restbodendicke in der Mehrzahl von Blechen gewährleistet.

Das erfindungsgemäße Verfahren zur Bestimmung der Qualität einer Fügeverbindung baut auf dem Vergleich einer aktuell erfassten Fügekurve auf, d. h. eines Kraft-Weg-Verlaufs der Fügevorrichtung. Dieser Kraft-Weg-Verlauf wird basierend auf der Bewegung des Antriebselements ermittelt, da die durch das Antriebselement aufgebrachte Kraft sowie der durch das Antriebselement zurückgelegte Weg mithilfe entsprechender Sensoren erfasst wird. Anhand dieses für den jeweiligen Fügevorgang spezifischen Kraft-Weg-Verlaufs kann man Rückschlüsse im Hinblick auf die Dicke der miteinander zu verbindenden Bleche, das Aufsetzen des Niederhalters auf die Mehrzahl von Blechen, das Aufsetzen des Niets auf die Mehrzahl von Blechen und daher im Vergleich zu einer Referenzkurve der Fügevorrichtung charakteristische Daten, wie Dicke der Mehrzahl von Blechen und Länge des verwendeten Niets, ableiten. Zu diesem Zweck ist der Referenz-Kraft-Weg-Verlauf der Fügevorrichtung vorzugsweise in einem Speicher eines Controllers zur Steuerung der Fügevorrichtung hinterlegt. Werden während eines aktuellen Fügevorgangs basierend auf den erfassten Kraft-Weg-Daten der charakterisierende Kraft-Weg-Verlauf dieses Fügevorgangs erfasst, dann kann im Nachhinein durch Vergleichen des aktuellen Kraft-Weg-Verlaufs mit dem Referenz-Kraft-Weg-Verlauf die Qualität der Fügeverbindung und somit des Fügevorgangs bewertet werden. Dieser Vergleich schließt ebenfalls ein, dass basierend auf dem aktuellen Kraft-Weg-Verlauf und dem Referenz-Kraft-Weg-Verlauf auswertende Berechnungen durchführbar sind, die eine Bewertung der Fügeverbindung ermöglichen.

Zur Ermittlung des Referenz-Kraft-Weg-Verlaufs wird im Vorfeld der herzustellenden Fügeverbindung die Herstellung einer Fügeverbindung simuliert. Das bedeutet, dass der Stempel und der Niederhalter mithilfe des Antriebselements gegen ein Gegenlagerbewegt wird, ohne dass sich zwischen Stempel und Matrize eine Mehrzahl von Blechen und ein Fügeelement, wie bspw. ein Stanzniet oder ein passender Stempel zum Clinchen, befinden. Als Gegenlager wird allgemein der strukturelle Teil der Vorrichtung bezeichnet, der die Bleche oder Bauteile abstützt und über die Bleche/Bauteile dem Stempel und/oder dem Niederhalter eine ausreichende Gegenkraft zur Herstellung der Verbindung entgegen bringt. Für das Herstellen einer Stanznietverbindung und einer Clinchverbindung ist das Gegenlager vorzugsweise eine Matrize. Zur Ermittlung des Referenz-Kraft-Weg-Verlaufs ist das Gegenlager vorzugsweise ein Amboss. Während dieses Vorgangs werden die durch das Antriebselement aufgebrachte Kraft sowie der durch das Antriebselement zurückgelegte Weg erfasst, um darauf aufbauend einen Referenz-Kraft-Weg-Verlauf erstellen zu können. Dieser Referenz-Kraft-Weg-Verlauf liefert charakteristische Daten der elastisch verformbaren Komponenten, wie vorzugsweise Niederhalterfedern und C-Rahmen, der Fügevorrichtung, die aufgrund der späteren Verwendung einer Mehrzahl von Blechen zwischen Stempel und Gegenlager sowie eines Stanzniets einer bestimmten Länge verändert werden. Über den Vergleich des Referenz-Kraft-Weg-Verlaufs und des aktuellen Kraft-Weg-Verlaufs lassen sich dann entsprechend diese charakteristischen Daten, wie bspw. die Dicke der Mehrzahl von Blechen und die Länge des Stanzniets, aus einem entsprechenden Vergleich ableiten und zur Auswertung der Qualität des Fügevorgangs heranziehen.

Gemäß einer bevorzugten Ausführungsform des vorliegenden Verfahrens wird der lineare Entlastungsbereich im Vergleich zu einem Referenz-Entlastungsbereich des Referenz-Kraft-Weg-Verlaufs bei Übereinstimmung eine vorgegebene Kopfendlage eines Stanzniets, insbesondere eine bündige Kopfendlage eines Halbhohl- oder Vollstanzniets oder eine definierte Kopfendlage eines Halbhohl- oder Vollstanzniets mit Kopfauflage, bei einem Einbringen eines Stanzniets in die Mehrzahl von Blechen oder eine vorbestimmte Restbodendicke bei einem Clinch-Vorgang identifizieren. Entsprechend identifiziert eine Anordnung des linearen Entlastungsbereichs versetzt zu kleineren Weg-Werten im Vergleich zum Referenz-Entlastungsbereich einen größeren als den vorgegebenen Kopfüberstand bezogen auf die Mehrzahl von Blechen oder eine größere als die vorbestimmte Restbodendicke beim Clinch-Vorgang, während bei einer Anordnung des linearen Entlastungsbereichs versetzt zu größeren Weg-Werten im Vergleich zum Referenz-Entlastungsbereich ein zu tief in die Mehrzahl von Blechen eingeprägtes Fügeelement oder eine kleinere als die vordefinierte Restbodendicke beim Clinch-Vorgang identifiziert.

Betrachtet man eine Fügevorrichtung mit einem C-Bügel, dann wird während des Fügevorgangs und im Speziellen gegen Ende des Fügevorgangs der C-Bügel aufgebogen, bis der Stanzniet vollständig gesetzt ist oder eine Clinch-Verbindung hergestellt worden ist. Nachdem der Fügevorgang durch Herstellen einer Verbindung beendet worden ist, wird das Antriebselement in seine Ausgangsposition zurück bewegt. Dabei zeigt der Kraft-Weg-Verlauf im aktuellen Kraft-Weg-Verlauf sowie im Referenz-Kraft-Weg-Verlauf einen linearen Entlastungsbereich. Dieser lineare Entlastungsbereich charakterisiert die elastische Rückkehrbewegung des C-Rahmens in seine Ausgangsform. Bei einer optimal hergestellten Stanznietverbindung bzw. bei einem optimalen Clinch-Vorgang endet dieser vorzugsweise bei einem angesteuerten vorbestimmten Kraftsollwert, für den die Herstellung einer optimalen Verbindung erwartet wird. Bei Vorliegen einer optimalen Verbindung müsste der lineare Entlastungsbereich innerhalb eines bevorzugten Toleranzbereichs auf dem Referenz-Entlastungsbereich verlaufen. Sollte jedoch eine bevorzugte Korrektur, im Speziellen eine parallel zur Weg-Achse vorzunehmende Verschiebung des Referenz-Entlastungsbereichs (siehe unten), zeigen, dass der vorgegebene Kraftsollwert nicht optimal auf die herzustellende Verbindung abgestimmt war, dann verläuft der lineare Entlastungsbereich des aktuellen Kraft-Weg-Verlaufs seitlich versetzt zum linearen Referenz-Entlastungsbereich. Bei einem Versatz zu kleineren Weg-Werten bedeutet dies einen nicht ausreichend tief gesetzten Stanzniet oder eine zu große Restbodendicke beim Clinch-Vorgang. Bei einem Versatz zu größeren Weg-Werten signalisiert dies einen zu tief gesetzten Stanzniet oder eine zu geringe Restbodendicke beim Clinch-Vorgang.

Gemäß einer weiteren bevorzugten Ausführungsform vorliegender Erfindung identifiziert ein linearer Entlastungsbereich im Kraft-Weg-Verlauf extrapoliert bis zu einem Schnittpunkt SP mit der Weg-Achse bei einer Kraft gleich Null oder einer Geraden zu einem definierten Kraft-Wert eine bündige oder vorgegebene Kopfendlage eines Stanzniets bei einem Eindringen eines Stanzniets in die Mehrzahl von Blechen oder eine vorbestimmte Restbodendicke bei einem Clinch-Vorgang, wenn der Schnittpunkt SP mit einem Referenz-Schnittpunkt R des linearen Referenz-Entlastungsbereichs extrapoliert zur Weg-Achse oder zu der Geraden zu einem definierten Kraft-Wert übereinstimmt. In gleicher Weise repräsentiert eine Abweichung des Schnittpunkts SP vom Referenz-Schnittpunkt R zu kleineren Weg-Werten einen größeren als den vorgegebenen Kopfüberstand bezogen auf die Mehrzahl von Blechen oder eine größere als die vorbestimmte Restbodendicke bei einem Clinch-Vorgang, während bei einer Abweichung des Schnittpunkts SP vom Referenz-Schnittpunkt R versetzt zu größeren Weg-Werten ein zu tief in die Mehrzahl von Blechen eingeprägtes Fügeelement oder eine kleinere als die vordefinierte Restbodendicke beim Clinch-Vorgang angezeigt wird.

Die obige Beschreibung des Vergleichs des linearen Entlastungsbereichs mit dem linearen Referenz-Entlastungsbereich ist in gleicher Weise auch auf die Interpretation des Vergleichs der Schnittpunkte aus dem extrapolieren linearen Entlastungsbereich und dem extrapoliert Referenz-Entlastungsbereich anwendbar.

Gemäß einer weiteren bevorzugten Ausfiihrungsform des vorliegenden Verfahrens, in dem der Referenz-Kraft-Weg-Verlauf in einem über eine Stufe getrennten ersten linearen Anstiegsbereich und einen zweiten linearen Anstiegsbereich eine Verformung der ersten Feder des Niederhalters und eine Verformung der zweiten Feder des Niederhalters darstellt, ist der weitere Schritt vorgesehen: Bilden einer Differenz des Weg-Werts W_{RS, 0} der Stufe im Referenz-Kraft-Weg-Verlauf und des Weg-Werts W_{ES, 0} der Stufe im erfassten Kraft-Weg-Verlauf, die eine Dicke der Mehrzahl der zu verbindenden Bleche darstellt.

Wie sich aus obiger Definition ergibt, ist aus dem Vergleich des aktuellen Kraft-Weg-Verlaufs mit dem Referenz-Kraft-Weg-Verlauf die Dicke der Mehrzahl von miteinander zu verbindenden Blechen ableitbar. Dies liegt vorzugsweise an der konstruktiven Ausgestaltung der Fügevorrichtung, deren Niederhalter durch zwei Federn unterschiedlicher Federkonstante in Fügerichtung vorspannbar ist. Wird aufgrund der bevorzugten Bewegung des Antriebselements der Niederhalter gegen eine Mehrzahl von Blechen gedrückt, werden zunächst die erste Feder des Niederhalters und nachfolgend die zweite Feder des Niederhalters komprimiert. Dies hat charakteristische lineare Abschnitte im Kraft-Weg-Verlauf zur Folge, deren jeweilige Steigung abhängig ist von der Federkonstante der jeweiligen Feder des Niederhalters. Zeigt der Übergangsbereich zwischen der Kompression der ersten Feder des Niederhalters und der Kompression der zweiten Feder des Niederhalters aufgrund der sie verbindenden Stufe einen Versatz im aktuellen Kraft-Weg-Verlauf im Vergleich zum Referenz-Kraft-Weg-Verlauf, dann entspricht dieser Versatz der Dicke der Mehrzahl von miteinander zu verbindenden Bleche, die zwischen Stempel und Gegenlager angeordnet sind.

Gemäß einer weiteren bevorzugten Ausführungsform vorliegender Erfindung umfasst das Verfahren den weiteren Schritt: Bilden einer Differenz zwischen einem Anfangs-Weg-Wert S₀ eines nicht-linearen Anstiegsbereichs angrenzend an einen zweiten linearen Anstiegsbereich und einem Start-Weg-Wert S₀₂ des angrenzenden zweiten linearen Anstiegsbereichs, die eine Länge des Fügeelements darstellt.

Bezugnehmend auf den Referenz-Kraft-Weg-Verlauf ist erkennbar, dass nach Durchlaufen des ersten linearen Anstiegsbereichs für die erste Feder des Niederhalters und des zweiten linearen Anstiegsbereichs für die zweite Feder des Niederhalters der Referenz-Kraft-Weg-Verlauf in einen dritten linearen Anstiegsbereich mit steilerem Verlauf im Vergleich zum ersten und zweiten Anstiegsbereich übergeht. Dieser dritte lineare Anstiegsbereich repräsentiert eine elastische Verformung, im Speziellen ein elastisches Aufbiegen, des C-Rahmens der Fügevorrichtung. Im Vergleich zum Referenz-Kraft-Weg-Verlauf geht im aktuellen Kraft-Weg-Verlauf der zweite lineare Anstiegsbereich in einen nicht-linearen Anstiegsbereich über. Dieser nicht-lineare Anstiegsbereich repräsentiert das Eindrücken des Stanzniets oder Fügeelements oder allgemein eines Stempels beim Clinch-Vorgang in die Mehrzahl von Blechen. Daher repräsentiert der Abstand zwischen dem Beginn des zweiten linearen Anstiegsbereichs im Kraft-Weg-Verlauf und dem Beginn des nicht-linearen Anstiegsbereichs eine der Länge des verwendeten Fügeelements proportionale Größe. Zur Kalibrierung dieser ermittelten Länge auf die tatsächliche Länge des Fügeelements ist bevorzugt eine setzkopftypische Konstante zu berücksichtigen. Diese Konstante beschreibt einen freien Weg des Stempels innerhalb des Niederhalters noch vor einem Aufsetzen auf den Blechen, nachdem der Niederhalter seine zum Halten der Bleche generierbare hohe Niederhaltekraft auf die Bleche aufgebracht hat. Dieser freie Weg ist abgestimmt auf die Längen des Stempels für einen Clinch-Vorgang und auf die Länge des Stempels mit in Fügerichtung vorgelagertem Stanzniet für einen Setzvorgang eines Vollstanzniet oder eines Halbhohlstanzniets. Daher ergibt sich bevorzugt die Länge des Fügeelements aus der Differenz der Konstante und dem Abstand zwischen dem Beginn des zweiten linearen Anstiegsbereichs im Kraft-Weg-Verlauf und dem Beginn des nicht-linearen Anstiegsbereichs. In Abhängigkeit von dem verwendeten Setzkopf bzw. der verwendeten Fügevorrichtung kann diese Konstante variieren.

Weiterhin bevorzugt umfasst vorliegendes Verfahren die weiteren Schritte: Vergleichen der ermittelten Länge des Fügeelements mit hinterlegten Nietlängen und Signalisieren eines Nietdrehers oder eines nicht-vorgegebenen Niets oder Fügeelements, wenn die ermittelte Länge des Fügeelements die hinterlegte minimale Nietlänge unterschreitet oder die maximale Nietlänge überschreitet. Im Speicherbereich des die Fügevorrichtung steuernden Mikrocontrollers sind verschiedene Nietlängen hinterlegt, die die möglichen zu verwendenden Fügeelemente repräsentieren. Da es gerade bei Stanznieten mit kurzer Schaftlänge im Vergleich zum Durchmesser des Nietkopfs möglich ist, dass diese im Fügekanal verkippen, dann signalisiert der oben diskutierte Abstand zur Bestimmung der Nietlänge, ob sich ein richtig ausgerichteter Stanzniet oder ein verkippter Stanzniet im Fügekanal befindet. Denn die hier vorzugsweise indirekt bestimmte Länge des Fügeelements muss einer der entsprechend hinterlegten Längen der Fügeelemente entsprechen. Zudem kommt es gerade bei der Verwendung unterschiedlicher Längen von Fügeelementen aus einem Magazin oder in einem Arbeitsablauf vor, dass ein nicht für die Fügeaufgabe vorgegebenes oder ein nicht geeignetes Fügeelement in den Setzkopf geladen wird. In diesem Fall identifiziert das Verfahren zur Qualitätsbestimmung oder -Überwachung das nicht geeignete Fügeelement und gibt ein entsprechendes Signal aus. Dieses Signal, sei es elektronisch, optisch und/oder akustisch, wird vorzugsweise im unten beschriebenen Steuerverfahren für die Fügevorrichtung verwendet, um eine Entscheidung über die Fortsetzung oder den Abbruch des Fügevorgangs zu treffen. In diesem Fall ist das Signal bevorzugt ein internes Signal im steuernden Mikrocontroller.

Vorliegende Erfindung offenbart zudem ein Steuerverfahren zum Verbinden einer Mehrzahl von Blechen mithilfe einer Fügevorrichtung, die ein Antriebselement in Kombination mit einem damit bewegbaren Stempel und mit einem damit bewegbaren Niederhalter umfasst. Dieses erfindungsgemäße Steuerverfahren weist die folgenden Schritte auf: Vorgeben einer maximalen Fügekraft über einen Kraftsollwert F_{Soll}, Erfassen einer durch das Antriebselement aufgebrachten Kraft mit einem ersten Sensor und eines durch das Antriebselement zurückgelegten Wegs mit einem zweiten Sensor während einer Bewegung des Antriebselements in und entgegen einer Fügerichtung in Form eines Kraft-Weg-Verlaufs, Bewegen des Antriebselements in Fügerichtung, wobei das Antriebselement die Bewegung auf den Stempel sowie über mindestens eine erste und eine zweite Feder auf den Niederhalter überträgt, bis der Kraftsollwert F_{Soll} erreicht ist, und danach Bewegen des Antriebselements in eine Ausgangsposition, Verschieben des Kraftsollwerts F_{Soll} um mindestens einen Korrekturwert K nach einem Vergleichen eines linearen Entlastungsbereichs im erfassten Kraft-Weg-Verlauf mit einer Referenzkurve der Fügevorrichtung, die als ein Referenz-Kraft-Weg-Verlauf beim Bewegen des Stempels und des Niederhalters über das Antriebselements zu und weg von einem Gegenlager ohne zwischengeordnete Bleche und ohne ein Fügeelement bestimmbar ist, um in einem nachfolgenden Fügevorgang eine vorgegebene Kopfendlage bei einem Fügevorgang eines Stanzniets oder eine vorbestimmte Restbodendicke in einem Clinch-Vorgang zu erzielen.

Das erfindungsgemäße Steuerverfahren ist in Analogie zu dem oben beschriebenen Verfahren zur Bestimmung der Qualität einer Fügeverbindung aufgebaut. Daher sind die bereits oben diskutierten Interpretationen der unterschiedlichen Verfahrensschritte in gleicher Weise übertragbar auf das hier beschriebene erfindungsgemäß Steuerverfahren.

Erfindungsgemäß bevorzugt weist das Steuerverfahren zudem die folgenden Schritte auf: Beibehalten des Kraftsollwerts F_{Soll}, wenn der lineare Entlastungsbereich mit dem Referenz-Entlastungsbereich übereinstimmt, Erhöhen des Kraftsollwerts F_{Soll} um den mindestens einen Korrekturwert K, wenn der lineare Entlastungsbereich im Vergleich zum Referenz-Entlastungsbereich zu kleineren Weg-Werten versetzt ist, und Verringern des Kraftsollwerts F_{Soll} um den mindestens einen Korrekturwert K, wenn der lineare Entlastungsbereich im Vergleich zum Referenz-Entlastungsbereich zu größeren Weg-Werten versetzt ist.

Gemäß einer weiteren bevorzugten Ausführungsform enthält das vorliegende Steuerverfahren die weiteren Schritte: Beibehalten des Kraftsollwerts F_{Soll}, wenn ein linearer Entlastungsbereich im Kraft-Weg-Verlauf extrapoliert bis zu einem Schnittpunkt SP mit der Weg-Achse oder einer Geraden an einem definierten Kraft-Wert die bündige bzw. die vorgegebene Kopfendlage oder die vordefinierte Restbodendicke repräsentiert, wenn der Schnittpunkt SP mit einem Referenz-Schnittpunkt R des linearen Referenz-Entlastungsbereichs extrapoliert bis zur Weg-Achse oder der Geraden an einem definierten Kraft-Wert übereinstimmt, Erhöhen des Kraftsollwerts F_{Soll} um den mindestens einen Korrekturwert, wenn eine Abweichung des Schnittpunkts SP von dem Referenz-Schnittpunkt R zu kleineren Weg-Werten einen größeren als den vorgegebenen Kopfüberstand oder eine größere als die vorbestimmte Restbodendicke beim Clinch-Vorgang anzeigt, und Verringern des Kraftsollwerts F_{Soll} um den mindestens einen Kennwert, wenn eine Abweichung des Schnittpunkts SP von dem Referenz-Schnittpunkt R zu größeren Weg-Werten einen zu tief geprägten Kopf des Stanzniets in der Mehrzahl von Blechen oder eine kleinere als die vorbestimmte Restbodendicke beim Clinch-Vorgang anzeigt.

Gemäß einer weiteren bevorzugten Ausführungsform des Steuerverfahrens, in dem der Referenz-Kraft-Weg-Verlauf in einem über eine Stufe getrennten ersten linearen Anstiegsbereich und einen zweiten linearen Anstiegsbereich eine Verformung der ersten Feder des Niederhalters und eine Verformung der zweiten Feder des Niederhalters darstellt, sind die folgenden weiteren Schritte vorgesehen: Bilden einer Differenz des Weg-Werts W_{RS, 0} der Stufe im Referenz-Kraft-Weg-Verlauf und des Weg-Werts W_{ES, 0} der Stufe im erfassten Kraft-Weg-Verlauf, die eine Dicke der Mehrzahl von zu verbindenden Blechen darstellt, und Verschieben des Kraftsollwerts F_{Soll} zu einem korrigierten Kraftsollwert F_{Soll, k} in Abhängigkeit von der ermittelten Dicke der Mehrzahl von zu verbindenden Bleche.

Gemäß einer weiteren Ausführungsform des vorliegenden Steuerverfahrens sind die folgenden weiteren Schritte vorgesehen: Bilden einer Differenz zwischen einem Anfangs-Weg-Wert S₀ eines nicht-linearen Anstiegsbereichs angrenzend an einen zweiten linearen Anstiegsbereich und einem Start-Weg-Wert S₀₂ des angrenzenden zweiten linearen Anstiegsbereichs, der eine Länge des Fügeelements darstellt, Vergleichen der ermittelten Länge des Fügeelements mit hinterlegten Nietlängen und Abbrechen des Fügevorgangs, wenn die ermittelte Länge des Fügeelements die hinterlegte minimale Nietlänge unterschreitet oder die maximale Nietlänge überschreitet. Wie es oben bereits in Bezug auf das Verfahren zur Qualitätsüberwachung beschrieben worden ist, welches bevorzugt die Grundlage des Steuerverfahrens bildet, wird mit obigem Vergleich erkannt, ob ein Nietdreher vorliegt oder sich ein nicht vorgegebener Niet für die bevorstehende Fügeaufgabe im Setzkanal befindet oder ob sich der passende Niet im Setzkanal befindet. Sofern sich nicht der passende Niet im Setzkanal befindet, wird der Fügevorgang abgebrochen. Da bevorzugt obiger Vergleich und somit auch die entsprechende Entscheidung zur Fortsetzung oder dem Abbruch des Fügevorgangs durch den Mikrocontroller getroffen wird, bevor das Fügelement in die Bleche gesetzt wird - also noch vor oder gleich zu Beginn des nicht-linearen Abschnitt des Kraft-Weg-Verlaufs - kann der Fügevorgang abgebrochen werden. In diesem Fall entfernt sich bevorzugt die Fügevorrichtung von den Blechen, um den nicht vorgegebenen Niet oder den verkippten Niet aus dem Fügekanal zu entfernen. Sobald dies erfolgt ist, wird ein neuer Fügevorgang mit Hilfe des bevorzugten Steuerverfahrens gestartet.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Fig. 1 A: eine Schnittdarstellung einer bevorzugten Ausführungsform einer Fügevorrichtung aus dem Stand der Technik, die in DE 100 21 781 B4 beschrieben ist und auf deren Aufbau und Funktionsweise hiermit Bezug genommen wird,
- Fig. 1 B: eine Ausschnittsvergrößerung aus der Schnittdarstellung gemäß Fig. 1A,
- Fig. 2: ein bevorzugter Kraft-Weg-Verlauf (blau) und ein bevorzugter Referenz-Kraft-Weg-Verlauf (rot) im Vergleich,
- Fig. 3: die Verläufe gemäß Fig. 3, wobei diese zur Auswertung anhand der Stufe übereinander gelegt worden sind,
- Fig. 4: eine schematische Darstellung zur Interpretation der Kopfendlage und Restbodendicke und zur Korrektur des Kraftsollwerts,

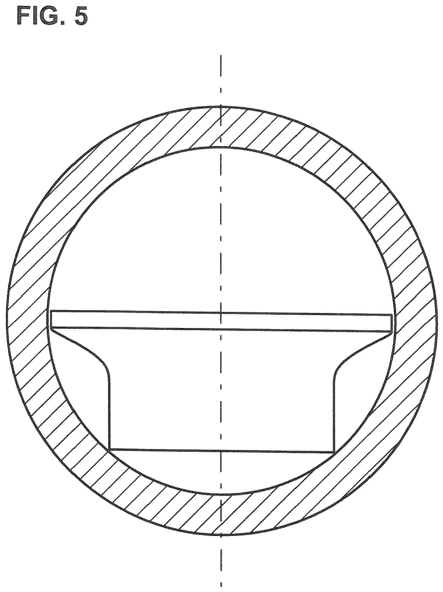

- Fig. 5: eine schematische Darstellung eines im Fügekanal gedrehten Stanzniets und
- Fig. 6: eine schematische Darstellung (a) der Kopfendlage eines Halbhohlstanzniets und (b) der Restbodendicke einer Clinch-Verbindung sowie (c) des Kopfüberstands eines Vollstanzniets mit Kopfauflage.

### 5. Detaillierte Beschreibung der bevorzugten Ausführungsformen

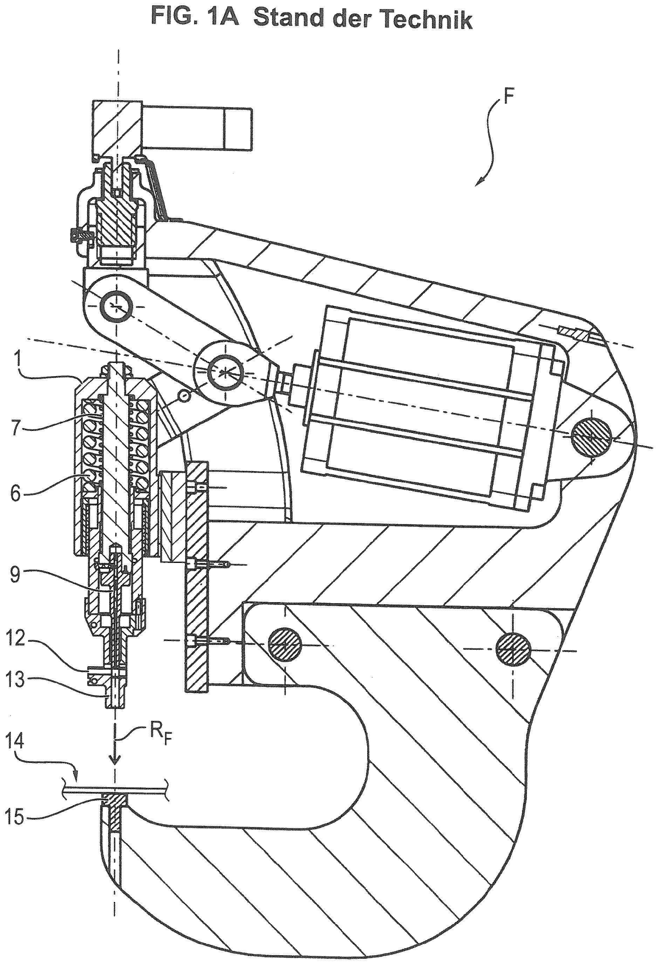

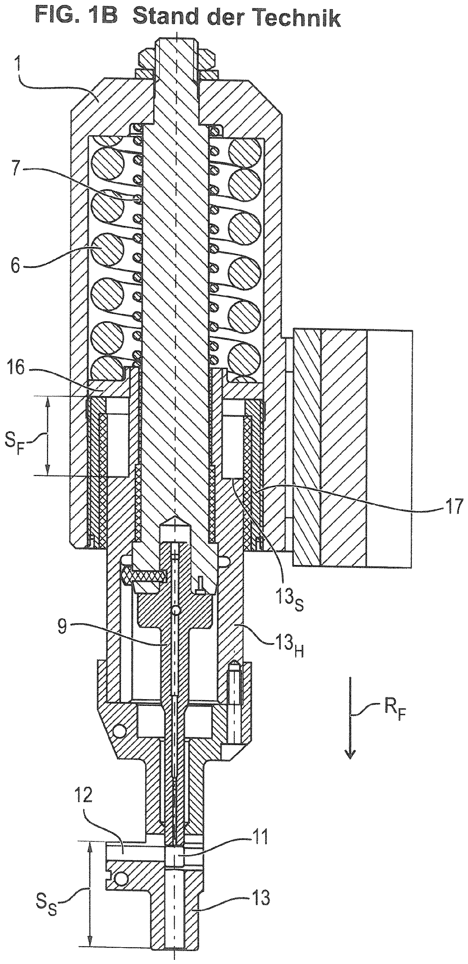

Das Steuerverfahren für ein Verbinden einer Mehrzahl von Blechen mithilfe einer Fügevorrichtung sowie das Verfahren zur Bestimmung der Qualität einer derartigen Fügeverbindung wurde für Fügevorrichtungen entwickelt, wie sie aus dem Stand der Technik bekannt sind. Eine derartige Fügevorrichtung ist in ihrer Konstruktion und Funktionsweise beispielsweise in DE 100 21 781 B4 beschrieben, deren Inhalt in diesem Zusammenhang durch Bezugnahme aufgenommen ist. Die Figuren 1A und 1B zeigen die in Bezug genommene Fügevorrichtung als eine bevorzugte Ausführungsform einer Fügevorrichtung zur Anwendung vorliegender Erfindung.

Die bevorzugte Grundstruktur der Fügevorrichtung F umfasst ein Antriebselement 1, das hier über ein Kniehebelgelenk angetrieben wird. Alternativ dazu sind gemäß weiterer bevorzugter Ausführungsformen ein hydraulischer Kolben-Zylinder-Antrieb oder ein elektromotorischer Spindeltrieb sowie ein pneumatischer Kolben-Zylinder-Antrieb einsetzbar. Der verwendete Antrieb bewegt das Antriebselement 1, das über eine lineare Bewegung einen Stempel 9 sowie einen Niederhalter 13 in Richtung einer Mehrzahl von Blechen 14 oder von diesen weg bewegt. Somit erzeugt das Antriebselement 1 in bekannter Weise eine gesteuerte lineare Bewegung von Stempel 9 und Niederhalter 13 parallel zur Fügerichtung R_{F}. Der Niederhalter 13 ist bevorzugt über zumindest eine erste Feder 7 und eine zweite Feder 6 gegen die Mehrzahl von Blechen 14 mechanisch vorspannbar. Während des Fügevorgangs zum Verbinden der Mehrzahl von Blechen 14 stützt sich die Mehrzahl von Blechen 14 an einem Gegenlager 15 ab. Im Rahmen eines Clinch-Vorgangs wird dieses Gegenlager 15 bevorzugt durch eine entsprechend geformte Matrize gebildet, die den Tiefziehprozess unterstützt. Beim Stanznieten eines Halbhohlstanzniets oder eines Vollstanzniets besteht das Gegenlager bevorzugt ebenfalls aus einer Matrize, die eine Ausbildung eines Schließkopfes unterstützt. Beim Bestimmen des Referenz-Kraft-Weg-Verlaufs wird bevorzugt ein Amboss als Gegenlager eingesetzt.

Erfindungsgemäß bevorzugt wird die Bewegung des Antriebselements 1 durch einen Wegsensor (nicht gezeigt) erfasst. Die erfassten Daten des Wegsensors werden an einen Mikrocontroller oder Industriecomputer zur Überwachung und Steuerung der Fügevorrichtung F übertragen und dort weiterverarbeitet. Die durch das Antriebselement 1 auf die in Fügerichtung R_{F} vorgelagerten Elemente Niederhalter 13, Federn 6, 7 und Stempel 9 übertragene Kraft wird mithilfe eines Kraftsensors (nicht gezeigt) erfasst. Derartige Kraftsensoren sind in Bauart und Anordnung in einer Fügevorrichtung bekannt. Die erfassten Daten des Kraftsensors werden an den Mikrocontroller oder Industriecomputer zur Überwachung und Steuerung der Fügevorrichtung F übertragen und dort weiterverarbeitet.

Erfindungsgemäß bevorzugt weist die erste Feder 7 im Vergleich zur zweiten Feder 6 eine kleinere Federkonstante auf. Somit ist die erste Feder 7 die schwache Feder, während die zweite Feder 6 die starke Feder ist. Die erste Feder 7 dient der Positionierung des Mundstücks des Niederhalters 13 in einer Ausgangslage. Entsprechend führt die Kraft der Feder 7 nach Beendigung eines Fügevorgangs und Lösen der Fügevorrichtung F von den Blechen 14 den Niederhalter 13 zurück in seine Ausgangsposition. Zur Realisierung dieser Funktion ist die Feder 7 vorzugsweise zwischen der Oberseite der Niederhalterhülse 13_{H} und der inneren Oberseite des Antriebselements 1 mechanisch vorgespannt.

Die zweite Feder 6 dient dem Ausüben einer Niederhaltekraft auf die Bleche 14. Die Niederhaltekraft wird vorzugsweise durch Vorspannen der zweiten Feder 6 zwischen der inneren Oberseite des Antriebselements 1 und einem Anschlag 16 eingestellt. Zu diesem Zweck ist gemäß einer bevorzugten Ausführungsform der Anschlag 16 mit Hilfe einer axial versetzbaren Gewindehülse 17 in oder entgegen der Fügerichtung F_{R} verschiebbar, wodurch die zweite Feder 6 entlastet oder zusammengedrückt wird.

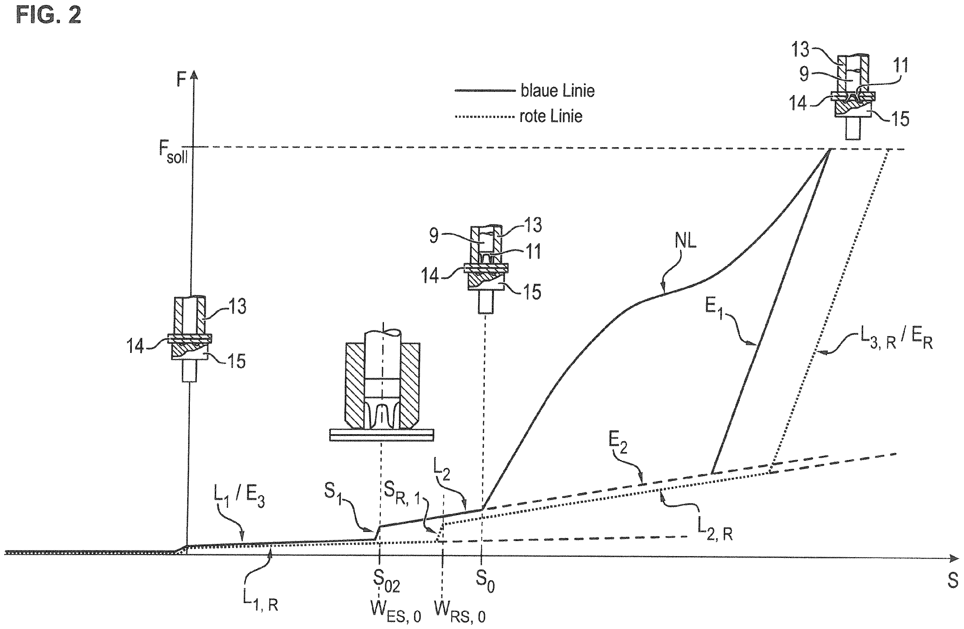

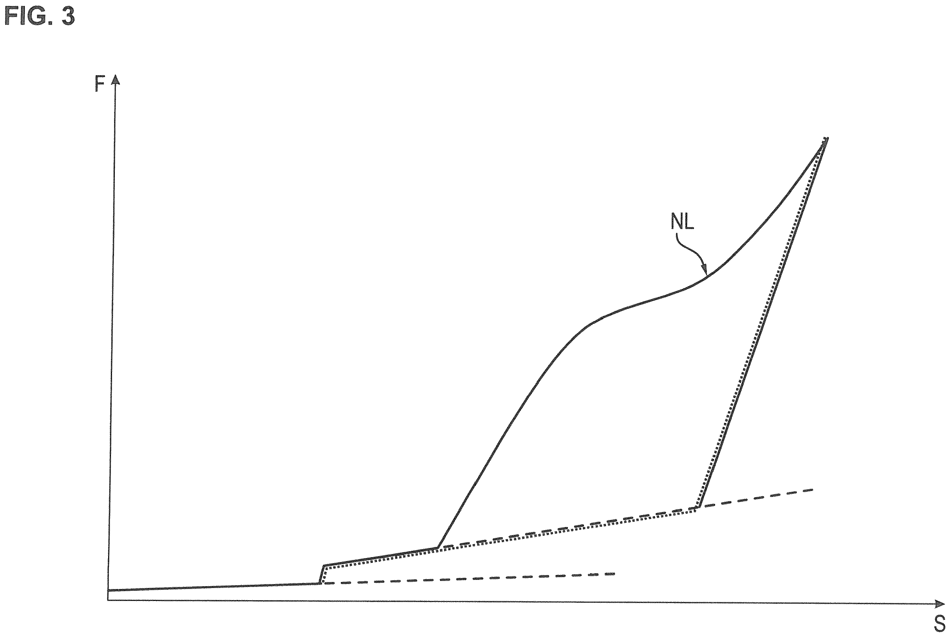

Das Antriebselement 1 wird nun in Fügerichtung bewegt und dabei werden der Weg W des Antriebselements 1 und die durch das Antriebselement 1 auf den Niederhalter 13 und den Stempel 9 aufgebrachte Kraft F erfasst. Der erfasste Weg S und die erfasste Kraft F sind im Kraft-Weg-Diagramm darstellbar, wie es beispielsweise in den Figuren 2, 3 und 4 gezeigt ist. Wenn sich das Antriebselement 1 in Fügerichtung R_{F} bewegt und die Bleche 14 noch nicht berührt hat, ist die Kraft F annähernd Null. Sobald das Mundstück des Niederhalters 13 auf die Bleche 14 aufsetzt, steigt die erfasste Kraft sprunghaft auf den Wert der voreingestellten Vorspannung der ersten Feder 7 an. Bewegt sich das Antriebselement 1 nach dem Aufsetzen auf den Blechen 14 weiter in Fügerichtung R_{F}, wird die erste Feder 7 weiter über einen in seiner Länge einstellbaren Weg S_{F} (siehe Fig. 1B) komprimiert, bis ein Absatz 13_{S} des Niederhalters 13 am Anschlag 16 anliegt. Im Kraft-Weg-Diagramm ist dies nach einer ersten Stufe anhand eines ersten linearen Anstiegs L₁ der Kraft-Weg-Kurve erkennbar. Die erste Stufe wurde in den Figuren 2 bis 4 gemäß einer bevorzugten Ausführungsform vorliegender Erfindung zum Koordinatenursprung, also auf den Weg S=0, verschoben. Daher beginnt der Kraft-Weg-Verlauf auch nicht mit der Kraft Null sondern mit der in der Feder 7 gespeicherten Vorspannkraft. Diese bevorzugte Verschiebung ist in Figur 2 dargestellt, in der sich der Kraft-Weg-Verlauf im Bereich der negativen Weg-Achse (Abszisse) fortsetzt (siehe rote und blaue Kurve).

Durch Anliegen des Absatzes 13s am Anschlag 16 wird nun durch weiteres Bewegen des Antriebselements 1 in Fügerichtung R_{F} die zweite Feder 6 in Kombination mit der ersten Feder 7 komprimiert. Der Niederhalter 13 bringt entsprechend als Niederhaltekraft mindestens die in der zweiten Feder 6 voreingestellte Vorspannung auf die Bleche 14 auf. Im Kraft-Weg-Verlauf ist die Wirkung der zweiten Feder 6 durch eine zweite Stufe S₁ oder einen zweiten Sprung und einen sich daran anschließenden linear ansteigenden Bereich L₂ erkennbar.

Während sich das Antriebselement 1 in Fügerichtung R_{F} bewegt, wird der oben genannte Weg S_{F} zurückgelegt, bis der Niederhalter 13 seine Niederhaltekraft auf die Bleche 14 aufbringt. Während der Niederhalter 13 um diesen voreinstellbaren Weg S_{F} oder auch Freiraum innerhalb der Fügevorrichtung F versetzt wird, bewegt sich der Stempel 9 koaxial innerhalb des Niederhalters 13 in Fügerichtung R_{F}. Der Weg S_{S} (siehe Fig. 1B), den der Stempel 9 innerhalb des Niederhalters 13 bis zum Aufsetzen auf den Blechen 14 zurücklegt, ist innerhalb der Fügevorrichtung F in seiner Länge gezielt einstellbar. Der Weg S_{S} wird vorzugsweise größer eingestellt als der zur Überbrückung des Freiraums durch den Niederhalter 13 zurückzulegende Weg S_{F}. Der Längenunterschied U_{L} zwischen S_{S} und S_{F}, also S_{S}-S_{F}=U_{L}>0, ist somit bevorzugt eine einstellbare und daher bekannte Größe der Fügevorrichtung F. Der Längenunterschied U_{L} stellt sicher, dass zunächst der Niederhalter 13 auf den Blechen 14 aufsetzt und seine volle Niederhaltekraft mit Hilfe der Federn 6, 7 auf die Bleche aufbringt, bevor der Stempel 9 selbst oder ein durch den Stempel 9 in Fügerichtung R_{F} bewegter Stanzniet die Bleche 14 mit einer Kraft beaufschlagt. Erst wenn der Stempel 9 oder ein durch den Stempel 9 in Fügerichtung R_{F} bewegter Stanzniet die Bleche 14 mit einer Kraft beaufschlagt, beginnt der Fügevorgang, der im erfassten Kraft-Weg-Verlauf bzw. in der Kraft-Weg-Kurve durch einen nichtlinearen Abschnitt NL erkennbar ist.

Während die oben genannten Verfahren allgemein auf Fügevorrichtungen anwendbar sind, werden sie anhand des Eindringens eines Stanzniets in die Mehrzahl von Blechen beschrieben. Daher zeigt die Fügevorrichtung F der Figuren 1A und 1B beispielgebend auch eine Nietzufuhr 12, die einen Stanzniet 11, insbesondere einen Halbhohl- oder einen Vollstanzniet unter den Stempel 9 zugeführt hat. In einem analog durchführbaren Clinch-Vorgang würde der Stempel 9 einen Tiefziehvorgang in einer entsprechend angepassten Matrize 15 durchführen, um die Mehrzahl von Blechen 14 miteinander zu verbinden.

Ähnliche geeignete Fügevorrichtungen sind in EP 1 294 505 B1, US 4,365,401, DE 100 31 073 A1 und DE 10 2004 015 568 A1 beschrieben, auf deren Konstruktion hierin Bezug genommen wird.

Figur 2 zeigt in einem Kraft-Weg-Diagramm zwei Verläufe. Die durchgezogene Linie **(*hier blau*)** beschreibt das Eindringen bzw. Setzen eines Stanzniets mit der oben beschriebenen Fügevorrichtung F. Dazu sind die Federn 6, 7 mechanisch vorgespannt. Das Antriebselement 1 wird kraftgesteuert aus seiner Ausgangsposition bis zu einem vorbestimmten Kraftsollwert F_{Soll} in Fügerichtung R_{F} bewegt und dann entgegen der Fügerichtung R_{F} in die Ausgangsposition zurück bewegt. Während dieser gesteuerten Bewegung des Antriebselements 1, die auf der Vorgabe von korrigierbaren Kraftsollwerten F_{Soll} basiert und keine Regelung oder Echtzeitregelung nutzt, wird der durch das Antriebselement 1 zurückgelegte Weg S und die durch das Antriebselement 1 aufgebrachte Kraft F erfasst und verarbeitet.

Der durchgezogene Kraft-Weg-Verlauf eines Fügevorgangs umfasst bevorzugt einen ersten linearen Anstiegsbereich L₁, einen sich daran anschließenden zweiten linearen Anstiegsbereich L₂, einen sich daran anschließenden nicht-linearen Anstiegsbereich NL sowie einen ersten linearen Entlastungsbereich E₁ mit einer ersten negativen Steigung und einen zweiten linearen Entlastungsbereich E₂ mit einer zweiten negativen Steigung. Die erste negative Steigung ist absolut größer als die zweite negative Steigung, so dass der erste Entlastungsbereich E₁ steiler abfällt als der zweite Entlastungsbereich E₂. Zudem verläuft der zweite Entlastungsbereich E₂ bevorzugt antiparallel zum Anstiegsbereich L₂ und geht dann ebenfalls antiparallel verlaufend in den Anstiegsbereich L₁ über. Die Anstiegsbereiche L₁ und L₂ sind vorzugsweise über eine Stufe S voneinander getrennt. Es ist ebenfalls bevorzugt, dass die Anstiegsbereiche L₁, L₂ ohne Stufe S direkt ineinander übergehen. In diesem Fall ist bevorzugt die Feder 6 des Niederhalters 13 nicht federvorgespannt. Sollten zusätzlich zu den Federn 6, 7 noch weitere Niederhalterfedern nacheinander in Eingriff gelangen, würde dies anhand weiterer linearer Anstiegsbereiche L im Kraft-Weg-Verlauf des Antriebselements 1 erkennbar sein. Der jeweilige Anstieg eines linearen Anstiegsbereichs L wird vorzugsweise bestimmt durch die Federkonstante der gerade in Kompression befindlichen Feder.

Bevor die schwache Feder 7 komprimiert wird, ist trotz Bewegung des Antriebselements 1 in Fügerichtung R_{F} die erfasste Kraft gleich Null oder im Rahmen der zu tolerierenden Schwankungen annähernd Null. Um den erfassten Kraft-Weg-Verlauf leichter interpretieren und in Kombination mit einem Referenz-Kraft-Weg-Verlauf auswerten zu können, wird bevorzugt ein Anfangspunkt des ersten linearen Anstiegsbereichs L₁ auf den Weg-Nullpunkt im Kraft-Weg-Diagramm gesetzt, wie es Figur 2 zeigt. Das Gleiche ist bevorzugt auf den unten diskutierten Referenz-Kraft-Weg-Verlauf anwendbar. Zu diesem Zweck werden vorzugsweise die erfassten Kraft-Weg-Daten im Industriecomputer im Hinblick auf den Beginn des Anstiegsbereichs L₁ ausgewertet. Nachdem dieses über mathematische Kriterien erkannt worden ist, wird der erfasste Kraft-Weg-Verlauf und der Referenz-Kraft-Weg-Verlauf derart zu negativen Weg-Werten verschoben, bis der Anstieg des Anstiegsbereichs L₁ am Weg-Wert gleich Null beginnt.

In gleicher Weise ist es alternativ möglich, den Beginn des zweiten linearen Anstiegsbereichs L₂ zu negativen Weg-Werten zu verschieben, bis der Anstieg des Anstiegsbereichs L₂ am Weg-Wert gleich Null beginnt. Auf diese Weise wird ein Einfluss eventueller Fehler bei der Messwertbestimmung oder allgemein in der Kraft-Weg-Phase L₁ reduziert.

Der zweite lineare Anstiegsbereich L₂ geht in den nicht-linearen Anstiegsbereich NL über. An dem genannten Übergangspunkt zwischen dem Bereich L₁ und dem Bereich NL setzt der Stanzniet, insbesondere ein Vollstanzniet oder ein Halbhohlstanzniet mit oder ohne Kopf, oder ein Stempel im Clinch-Vorgang oder ein anderes Fügeelement bewegt durch den Stempel 9 auf der Mehrzahl von Blechen 14 auf. Bildet man daher die Differenz zwischen dem Anfangs-Weg-Wert S₀ des nicht-linearen Anstiegsbereichs NL angrenzend an den zweiten linearen Anstiegsbereich L₂ und dem Start-Weg-Wert S₀₂ des angrenzenden zweiten linearen Anstiegsbereichs L₂, dann ergibt sich daraus ein der Länge des verwendeten Fügeelements proportionaler Längenabschnitt. Um daraus die Länge des Fügeelements zu bestimmen, ist von der bereits oben diskutierten setzkopftypischen Konstante U_{L} der aus dem Kraft-Weg-Verlauf bestimmte Längenabschnitt l, also l=S₀-S₀₂, abzuziehen.

Da die verwendete Fügevorrichtung kraftgesteuert arbeitet, wird das Antriebselement 1 in Fügerichtung R_{F} bewegt, bis der vorgegebene Kraftsollwert F_{Soll} erreicht ist. Das Erreichen des Kraftsollwerts F_{Soll} bedeutet, dass der Fügevorgang, also das Verbinden der Mehrzahl von Blechen, beendet ist.

Nach Erreichen dieses vorgegebenen und bevorzugt im steuernden Mikrocontroller oder Industriecomputer in dessen Speicherbereich hinterlegten Kraftsollwerts F_{Soll} wird das Antriebselement 1 entgegen der Fügerichtung R_{F} in seine Ausgangsposition zurück bewegt. Daher ergibt sich im Kraft-Weg-Verlauf der erste Entlastungsbereich E₁. Dieser verdeutlicht, dass ein bevorzugt mit der Fügevorrichtung eingesetzter C-Rahmen bei dieser Entlastung in seine Ausgangsform zurückkehrt, da er während des Fügevorgangs elastisch aufgebogen worden ist. Sobald der C-Rahmen nahezu vollständig seine Ausgangsform wieder erreicht hat, geht der erste Entlastungsbereich E₁ in den zweiten Entlastungsbereich E₂ über. Lediglich die durch den Niederhalter aufgebrachten Kräfte bewirken noch ein geringfügiges Aufbiegen des C-Rahmens. Diese Niederhalterkräfte und das damit verbundene Aufbiegen des C-Rahmens werden als vernachlässigbar gering angesehen, so dass sie vorzugsweise bei der Auswertung unberücksichtigt bleiben. Innerhalb dieses Entlastungsbereichs E₂ entspannt sich die Feder 6 des Niederhalters 13. Über die Stufe S geht der Entlastungsbereich E₂ in den Entlastungsbereich E₃ über, in dem sich in gleicher Weise die Feder 7 des Niederhalters 13 entspannt, bis das Antriebselement 1 seine Ausgangsposition erreicht hat.

Um den erfassten Kraft-Weg-Verlauf auswerten und im Rahmen des Steuerverfahrens den Fügevorgang optimieren zu können, wird ein Referenz-Kraft-Weg-Verlauf ermittelt. Dieser ist in Figur 2 als rote Linie dargestellt. Dazu wird das Antriebselement 1 in Fügerichtung R_{F} und somit der Stempel gegen das Gegenlager versetzt, ohne dass eine Mehrzahl von Blechen und ohne dass ein Fügeelement zwischen Stempel und Gegenlager angeordnet ist. Basierend auf dieser Konfiguration setzt sich der Referenz-Kraft-Weg-Verlauf nur aus den Beiträgen der elastisch verformbaren Komponenten der Fügevorrichtung F zusammen, die direkt ineinander übergehen. Dies sind die Kompressionen der Niederhalterfedern 6, 7 in den linearen Anstiegsbereichen L_{1, R} und L_{2, R} sowie ein Aufbiegen des C-Rahmens im linearen Anstiegsbereich L_{3, R}. Nach Erreichen des vorgegebenen Kraftsollwerts F_{Soll} wird das Antriebselement 1 in seine Ausgangsposition zurück bewegt. Diese entlastende Rückbewegung erfolgt in den linearen Bereichen L_{3, R}, L_{2, R}, L_{1, R} des Referenz-Kraft-Weg-Verlaufs. Aufgrund des Fehlens einer plastischen Verformung beim Erfassen der Referenzkurve erfolgt die Bewegung des Antriebselements 1 in und entgegen der Fügerichtung R_{F} auf demselben Referenz-Kraft-Weg-Verlauf.

Als für jede Fügevorrichtung charakteristische Größe wird bevorzugt der oben beschriebene Referenz-Kraft-Weg-Verlauf erfasst. Um ihn bei der späteren Auswertung von tatsächlichen Verbindungsprozessen nutzen zu können, wird bevorzugt zunächst der Referenz-Kraft-Weg-Verlauf zu negativen Weg-Werten derart verschoben, dass der erste lineare Anstiegsbereich L_{1, R} auch beim Weg-Wert 0 seinen Anstieg beginnt. Alternativ dazu ist es ebenfalls bevorzugt, dass der zweite lineare Anstiegsbereich L_{2, R} beim Weg-Wert 0 seinen Anstieg beginnt (siehe vom). Nutzt man diese Position als Referenzpunkt für alle auszuwertenden Kraft-Weg-Verläufe, d. h. jeder Anfangspunkt des ersten linearen Anstiegsbereichs L₁ oder des zweiten linearen Anstiegsbereichs L₂ wird auf den Weg-Wert 0 gelegt, dann sind die Kraft-Weg-Verläufe mithilfe des Referenz-Kraft-Weg-Verlaufs auswertbar und dadurch die Verbindungsprozesse optimierbar.

Wie oben bereits beschrieben worden ist, ergibt sich die Dicke der miteinander zu verbindenden Bleche 14 aus dem Abstand der Stufe S₁ im Kraft-Weg-Verlauf und S_{R, 1} im Referenz-Kraft-Weg-Verlauf, speziell aus der Differenz der Werte W_{RS, 0} und W_{ES, 0}. Um nun festzustellen, ob mit dem vorbestimmten Kraftsollwert F_{Soll} eine optimale Fügeverbindung angesteuert worden ist, werden bevorzugt der Kraft-Weg-Verlauf und der Referenz-Kraft-Weg-Verlauf relativ zu einander parallel zur Weg-Achse derart verschoben, dass sich die Stufen S₁ und S_{R, 1} in Überdeckung befinden. Diese Relativverschiebung kann rechnerisch und/oder graphisch im steuernden Mikrocontroller oder Industriecomputer erfolgen.

Sobald die Stufen S₁, S_{R, 1} in Überdeckung gebracht worden sind, sind die linearen Entlastungsbereiche E₁ des Kraft-Weg-Verlaufs und E_{R} des Referenz-Kraft-Weg-Verlaufs miteinander vergleichbar und auswertbar. Nachdem der Sollwert der Fügekraft F_{Soll} angesteuert worden ist, wird das Antriebselement 1 durch Bewegung entgegen der Fügerichtung R_{F} entlastet. In dieser ersten Entlastungsphase kehrt der elastisch aufgebogene C-Bügel nahezu vollständig, d.h. mit vernachlässigbar geringen elastischen Verformungen durch die Niederhalterfedern, in seine Ausgangsform zurück, so dass der lineare Entlastungsbereich E₁ parallel zum linearen Entlastungsbereich E_{R} verläuft. Ist dieser parallele Verlauf nicht erfassbar, bestätigt dies bevorzugt einen Fehler der Fügevorrichtung oder ihrer Sensorik.

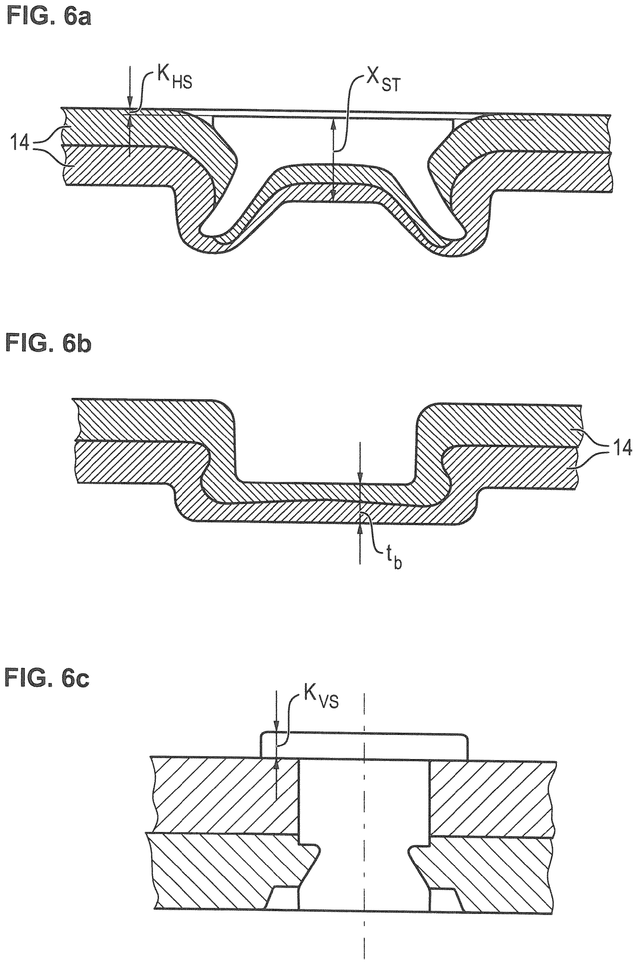

Wenn der Stanzniet mit einer Kopfendlage K_{HS} (siehe Figur 6a und c) im bevorzugten Intervall von 0≤ K_{HS}≤0,5 mm gesetzt worden ist, dann liegt der lineare Entlastungsbereich E₁ auf dem linearen Entlastungsbereich E_{R} des Referenz-Kraft-Weg-Verlaufs. Entsprechend ist der Kopf bevorzugt bündig zur obersten Blechlage der Mehrzahl von Blechen angeordnet (siehe Fig. 6a) oder mit dem seiner Kopfhöhe entsprechenden Kopfüberstand bei Halbhohl- oder Vollstanznieten mit Kopfauflage (siehe Fig. 6c). Gemäß einer weiteren bevorzugten Ausführungsform ist die Oberseite des Nietkopfs mit einer Tiefe von K_{HS}=0,1 mm oder gemäß einer weiteren bevorzugten Ausführungsform mit einem maximalen Kopfüberstand über der Bauteil- bzw. Blechoberfläche von 0,1 mm angeordnet (siehe Fig. 6a). Auf diese Weise wird bevorzugt rechnerisch und/oder graphisch eine optimale Einstellung des vordefinierten Kraftsollwerts F_{Soll} der Fügekraft bestätigt. Das Gleiche gilt für eine Fügekraft, mit der die optimale Restbodendicke t_{b} (siehe Figur 6b) erzielt wird.

Ist der angesteuerte Kraftsollwert F_{Soll} nicht ausreichend hoch, wird der Stanzniet, insbesondere Vollstanzniet oder Halbhohlstanzniet ohne Kopfauflage, mit einem Kopfüberstand K_{HS} gesetzt oder der Stanzniet mit Kopfauflage mit einer größeren als der vorgegebenen Kopfendlage K_{VS} oder eine Clinch-Verbindung mit zu großer Restbodendicke erzeugt. Entsprechend ist bei einer Entlastung des Antriebselements 1 der lineare Entlastungsbereich E₁ zu kleineren Weg-Werten versetzt angeordnet im Vergleich zum Entlastungsbereich E_{R} des Referenz-Kraft-Weg-Verlaufs.

Ist der angesteuerte Kraftsollwert F_{Soll} zu hoch eingestellt, wird der Stanzniet, insbesondere Vollstanzniet oder Halbhohlstanzniet ohne Kopfauflage, zu tief in die Mehrzahl von Blechen eingeprägt oder der Stanzniet mit Kopfauflage mit einer kleineren als der vorgegebenen Kopfendlage K_{VS} oder eine Clinch-Verbindung mit zu geringer Restbodendicke erzeugt. Entsprechend ist bei einer Entlastung des Antriebselements 1 der lineare Entlastungsbereich E₁ zu größeren Weg-Werten versetzt angeordnet im Vergleich zum Entlastungsbereich E_{R} des Referenz-Kraft-Weg-Verlaufs.

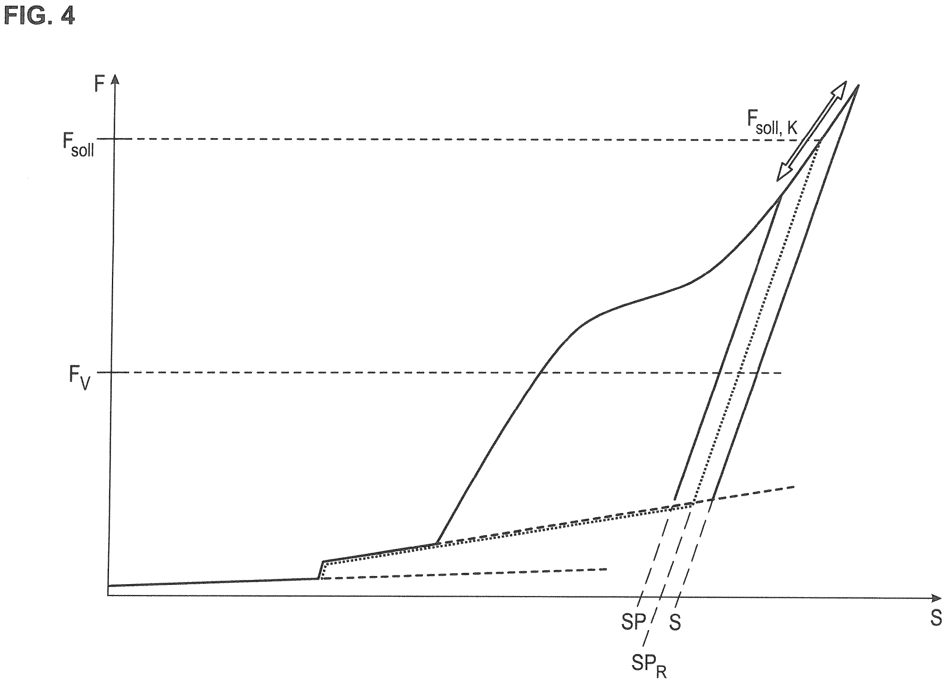

Um den Kraftsollwert F_{Soll} zur Verbesserung der herzustellenden Fügeverbindung optimieren zu können, wird ein Korrekturwert vorgeschlagen. Dieser Korrekturwert ist bevorzugt im Industriecomputer im Rahmen eines Kennfeldes hinterlegt. Der Korrekturwert ist bevorzugt kennwertabhängig bezogen auf die jeweiligen Bedingungen des Fügevorgangs angepasst. Bei einem zu tief geprägten Stanzniet korrigiert der Korrekturwert K den Kraftsollwert F_{Soll} zu kleineren Werten, während er bei einem mit Kopfüberstand oder zu großem Kopfüberstand gesetzten Stanzniet oder einer zu großen Restbodendicke die hinterlegte Setzkraft F_{Soll} mithilfe des Korrekturfaktors K erhöht. Entsprechend ergeben sich die dann anzusteuernden Fügekräfte F_{Soll, K} (siehe Figur 4).

Vorzugsweise wird ein Toleranzband um den Entlastungsbereich E_{R} des Referenz-Kraft-Weg-Verlaufs definiert. Basierend darauf ist sowohl graphisch wie auch rechnerisch ermittelbar, mit welcher Kopfendlage oder Restbodendicke der Fügevorgang bei dem vorgegebenen Kraftsollwert F_{Soll} abgeschlossen worden ist. Sollte der lineare Entlastungsbereich E₁ des ermittelten Kraft-Weg-Verlaufs nicht innerhalb des bevorzugten Toleranzbands liegen, dann wird je nach Verbindungsergebnis der Kraftsollwert F_{Soll} um einen Korrekturfaktor K verschoben. Vorzugsweise ist der Korrekturfaktor K in Form eines Kennfelds hinterlegt. In Abhängigkeit davon, ob eine Abweichung des linearen Entlastungsbereichs E₁ zu kleineren oder größeren Weg-Werten bezogen auf den linearen Entlastungsbereich E_{R} vorliegt und wie groß diese Abweichung absolut ist, liefert das Kennfeld einen entsprechend abgestimmten Korrekturfaktor K. Das entsprechende Kennfeld ist bevorzugt im Speicherbereich des Industriecomputers hinterlegt und von dort abrufbar.

Gemäß einer weiteren Alternative des Steuerprogramms und des Programms zur Bestimmung der Qualität der Fügeverbindung wird ein Schnittpunkt SP zwischen dem linearen Entlastungsbereich E₁ und einer Geraden bei einem gewählten Vergleichskraftwert Fv ermittelt. In Analogie wird ein Schnittpunkt SP_{R} zwischen dem linearen Entlastungsbereich E_{R} und dem Vergleichs-Kraftwert Fv gebildet. Es ist ebenfalls bevorzugt, diese Schnittpunkte auf der Weg-Achse, also bei einem Kraftwert von Null zu ermitteln und miteinander zu vergleichen. Stimmen die Schnittpunkte SP und SP_{R} miteinander überein, dann ist der Kraftsollwert F_{Soll} optimal eingestellt. In diesem Fall signalisiert die Übereinstimmung eine bündige Kopfendlage des Stanzniets oder das Erreichen der vordefinierten Restbodendicke in einem Clinch-Vorgang. Sollte der Schnittpunkt SP zu kleineren Weg-Werten verschoben sein, dann wird dadurch ein Kopfüberstand des Stanzniets oder eine größere als die vorbestimmte Restbodendicke beim Clinch-Vorgang angezeigt. In diesem Fall wird der Kraftsollwert F_{Soll} um den mindestens einen Korrekturwert K erhöht. Sollte der gesetzte Stanzniet zu tief in die Blechlagen eingeprägt sein oder eine zu geringe Restbodendicke erzielt worden sein im Clinch-Vorgang, dann wird der Kraftsollwert F_{Soll} um den mindestens einen Kennwert K verringert.

Wie bereits oben erläutert worden ist, ermittelt man die Länge des Fügeelements aus der Differenz des Anfangs-Weg-Werts S₀ des nicht-linearen Anstiegsbereichs NL angrenzend an den zweiten linearen Anstiegsbereich L₂ und einem Start-Weg-Wert S₀₂ des angrenzenden zweiten linearen Anstiegsbereichs L₂.

Erfindungsgemäß bevorzugt sind im Speicherbereich des steuernden Industriecomputers die verwendeten Nietlängen und Stanznietgeometrien hinterlegt. Anhand von Figur 1 ist erkennbar, dass der Stanzniet 11 dem Fügekanal unterhalb des Stempels 9 zugeführt wird. Der Fügekanal, der bevorzugt auch als Niederhalter 13 dient, besitzt einen Innendurchmesser, der annähernd einem Kopfdurchmesser des Stanzniets 11 entspricht oder etwas größer ausgebildet ist. Besitzt nun der Stanzniet einen Kopfdurchmesser und eine Länge seines Nietschafts im Verhältnis von ≥2:1, vorzugsweise 8:3,3 oder 12:5 oder 8:4, dann können diese Stanzniete 11 im Fügekanal verkippen. In diesem Fall wäre der Nietschaft nicht mehr parallel zur Fügerichtung R_{F} ausgerichtet, sondern winklig oder nahezu senkrecht dazu, so dass der Stanzniet hochkant im Fügekanal angeordnet wäre. Wie sich aus obigem Verhältnis ergibt, ist ein Nietdreher nur bei relativ kurzen Stanznieten möglich. Denn sobald der Nietschaft länger ist als die Hälfte des Nietkopfdurchmessers, lässt der Durchmesser des Fügekanals ein Verkippen nicht mehr zu. Derart kurze Niete haben ein Kopfdurchmesser-Schaftlängen-Verhältnis von 8:3.5 mm oder 8:4 mm. Wird daher nach der obigen Bestimmung der Nietlänge und dem Vergleich mit hinterlegten Nietlängen erkannt, dass die bestimmte Nietlänge größer ist als die hinterlegte maximale Nietlänge, dann signalisiert dies einen Nietdreher. Entsprechend wird der laufende Fügevorgang daraufhin abgebrochen.

## Patentansprüche

1. Verfahren zur Bestimmung der Qualität einer Fügeverbindung, die in einer Mehrzahl von Blechen (14) mithilfe einer Fügevorrichtung (F) hergestellt wird, die ein Antriebselement (1) in Kombination mit einem damit bewegbaren Stempel (9) und mit einem damit bewegbaren Niederhalter (13) umfasst, wobei das Verfahren die folgenden Schritte aufweist:
a. Bewegen des Antriebselements (1) in einer Fügerichtung (R_{F}), wobei das Antriebselement (1) die Bewegung auf den Stempel (9) sowie über mindestens eine erste (7) und eine zweite Feder (6) auf den Niederhalter (13) überträgt,
b. Erfassen einer durch das Antriebselement (1) aufgebrachten Kraft F und eines durch das Antriebselement (1) zurückgelegten Wegs S während einer Bewegung des Antriebselements (1) in und entgegen der Fügerichtung (R_{F}) in Form eines Kraft-Weg-Verlaufs und das Verfahren ist **dadurch gekennzeichnet, dass**
c. das Erfassen der durch das Antriebselement (1) aufgebrachten Kraft F mit einem ersten Sensor und des durch das Antriebselement (1) zurückgelegten Wegs S mit einem zweiten Sensor erfolgt und
d. nach Abschluss eines Fügevorgangs Vergleichen eines linearen Entlastungsbereichs (E₁) im erfassten Kraft-Weg-Verlauf mit einer Referenzkurve der Fügevorrichtung (F), die als ein Referenz-Kraft-Weg-Verlauf beim Bewegen des Stempels (9) und des Niederhalters (13) über das Antriebselement (1) zu und weg von einem Gegenlager (15) ohne zwischengeordnete Bleche (14) und ohne ein Fügeelement bestimmbar ist, wobei der Vergleich eine Bewertung einer Kopfendlage eines Fügeelements oder einer Restbodendicke in der Mehrzahl von Blechen (14) gewährleistet.

2. Verfahren gemäß Anspruch 1, wobei der lineare Entlastungsbereich (E₁) im Vergleich zu einem Referenz-Entlastungsbereich (E_{R}) bei Übereinstimmung eine vorgegebene Kopfendlage eines Stanzniets, insbesondere eine bündige Kopfendlage eines Halbhohl- oder eines Vollstanzniets oder eine definierte Kopfendlage eines Halbhohl- oder Vollstanzniets mit Kopfauflage, bei einem Einbringen eines Stanzniets in die Mehrzahl von Blechen (14) oder eine vorbestimmte Restbodendicke bei einem Clinch-Vorgang, bei einer Anordnung des linearen Entlastungsbereichs (E₁) versetzt zu kleineren Weg-Werten im Vergleich zum Referenz-Entlastungsbereich (E_{R}) einen größeren als den vorgegebenen Kopfüberstand bezogen auf die Mehrzahl von Blechen (14) oder eine größere als die vorbestimmte Restbodendicke beim Clinch-Vorgang und bei einer Anordnung des linearen Entlastungsbereichs (E₁) versetzt zu größeren Weg-Werten im Vergleich zum Referenz-Entlastungsbereich (E_{R}) ein zu tief in die Mehrzahl von Blechen (14) eingeprägtes Fügeelement oder eine kleinere als die vordefinierte Restbodendicke beim Clinch-Vorgang identifiziert.

3. Verfahren gemäß Anspruch 1, wobei ein linearer Entlastungsbereich (E₁) im Kraft-Weg-Verlauf extrapoliert bis zu einem Schnittpunkt SP mit der Weg-Achse oder einer Geraden zu einem definierten Kraft-Wert eine bündige oder vorgegebene Kopfendlage eines Stanzniets bei einem Einbringen eines Stanzniets in die Mehrzahl von Blechen (14) oder eine vorbestimmte Restbodendicke bei einem Clinch-Vorgang repräsentiert, wenn der Schnittpunkt SP mit einem Referenzschnittpunkt R des linearen Referenz-Entlastungsbereichs (E_{R}) extrapoliert bis zur Weg-Achse oder zu der Geraden zu einem definierten Kraft-Wert übereinstimmt, bei einer Abweichung des Schnittpunkts SP vom Referenzschnittpunkt R zu kleineren Weg-Werten im Vergleich zum Referenz-Entlastungsbereich (E_{R}) einen größeren als den vorgegebenen Kopfüberstand bezogen auf die Mehrzahl von Blechen (14) oder eine größere als die vorbestimmte Restbodendicke beim Clinch-Vorgang repräsentiert und bei einer Abweichung des Schnittpunkts SP vom Referenzschnittpunkt R versetzt zu größeren Weg-Werten ein zu tief in die Mehrzahl von Blechen (14) eingeprägtes Fügeelement oder eine kleinere als die vordefinierte Restbodendicke beim Clinch-Vorgang repräsentiert.

4. Verfahren gemäß einem der vorhergehenden Ansprüche, in dem der Referenz-Kraft-Weg-Verlauf in einem über eine Stufe (S₁) getrennten ersten linearen Anstiegsbereich (L₁) und einem zweiten linearen Anstiegsbereich (L₂) eine Verformung der ersten Feder (7) des Niederhalters (13) und eine Verformung der zweiten Feder (6) des Niederhalters (13) darstellt, und das Verfahren als weiteren Schritt aufweist:
Bilden einer Differenz des Weg-Werts W_{RS, 0} der Stufe (S_{R, 1}) im Referenz-Kraft-Weg-Verlauf und des Weg-Werts W_{ES, 0} der Stufe (S₁) im erfassten Kraft-Weg-Verlauf, die eine Dicke der Mehrzahl von zu verbindenden Blechen (14) darstellt.

5. Verfahren gemäß Anspruch 4, mit dem weiteren Schritt:
Bilden einer Differenz zwischen einem Anfangs-Weg-Wert S₀ eines nicht-linearen Anstiegsbereichs (NL) angrenzend an einen zweiten linearen Anstiegsbereich (L₂) und einem Start-Weg-Wert S₀₂ des angrenzenden zweiten linearen Anstiegsbereichs (L₂), die eine Länge des Fügeelements darstellt.

6. Verfahren gemäß Anspruch 5, mit dem weiteren Schritt:
Vergleichen der ermittelten Länge des Fügeelements mit hinterlegten Nietlängen und
Signalisieren eines Nietdrehers oder eines nicht-vorgegebenen Niets, wenn die ermittelte Länge des Fügeelements die hinterlegte minimale Nietlänge unterschreitet oder die maximale Nietlänge überschreitet.

7. Steuerverfahren für ein Verbinden einer Mehrzahl von Blechen (14) mithilfe einer Fügevorrichtung (F), die ein Antriebselement (1) in Kombination mit einem damit bewegbaren Stempel (9) und mit einem damit bewegbaren Niederhalter (13) umfasst, und das Verfahren ist **gekennzeichnet durch** die folgenden Schritte:
a. Vorgeben einer maximalen Fügekraft über einen Kraftsollwert F_{Soll},
b. Erfassen einer durch das Antriebselement (1) aufgebrachten Kraft F mit einem ersten Sensor und eines durch das Antriebselement (1) zurückgelegten Wegs S mit einem zweiten Sensor während einer Bewegung des Antriebselements (1) in und entgegen einer Fügerichtung (R_{F}) in Form eines Kraft-Weg-Verlaufs,
c. Bewegen des Antriebselements (1) in Fügerichtung (R_{F}), wobei das Antriebselement (1) die Bewegung auf den Stempel (9) sowie über mindestens eine erste (7) und eine zweite Feder (6) auf den Niederhalter (13) überträgt, bis der Kraftsollwert F_{Soll} erreicht ist, und danach Bewegen des Antriebselements (1) in eine Ausgangsposition,
d. Verschieben des Kraftsollwerts F_{Soll} um mindestens einen Korrekturwert K nach einem Vergleichen eines linearen Entlastungsbereichs (E₁) im erfassten Kraft-Weg-Verlauf mit einer Referenzkurve der Fügevorrichtung (F), die als ein Referenz-Kraft-Weg-Verlauf beim Bewegen des Stempels (9) und des Niederhalters (13) über das Antriebselement (1) zu und weg von einem Gegenlager (15) ohne zwischengeordnete Bleche (14) und ohne ein Fügeelement bestimmbar ist, um in einem nachfolgenden Fügevorgang eine vorgegebene Kopfendlage beim Stanznieten oder eine vorbestimmte Restbodendicke in einem Clinch-Vorgang zu erzielen.

8. Steuerverfahren gemäß Anspruch 7, das des Weiteren enthält:
Beibehalten des Kraftsollwerts F_{Soll}, wenn der lineare Entlastungsbereich (E₁) mit dem Referenz-Entlastungsbereich (E_{R}) übereinstimmt,
Erhöhen des Kraftsollwerts F_{Soll}, um den mindestens einen Korrekturwert K, wenn der lineare Entlastungsbereich (E1) im Vergleich zum Referenz-Entlastungsbereich (E_{R}) zu kleineren Weg-Werten versetzt ist, und
Verringern des Kraftsollwerts F_{Soll} um den mindestens einen Korrekturwert K, wenn der lineare Entlastungsbereich (E₁) im Vergleich zum Referenz-Entlastungsbereich (E_{R}) zu größeren Weg-Werten versetzt ist.

9. Steuerverfahren gemäß Anspruch 7 oder 8, mit dem weiteren Schritt:
Beibehalten des Kraftsollwerts F_{Soll}, wenn ein linearer Entlastungsbereich (E₁) im Kraft-Weg-Verlauf extrapoliert bis zu einem Schnittpunkt SP mit der Weg-Achse oder einer Geraden an einem definierten Kraft-Wert, die bündige oder vorgegebene Kopfendlage oder die vordefinierte Restbodendicke repräsentiert, wenn der Schnittpunkt SP mit einem Referenzschnittpunkt R des linearen Referenz-Entlastungsbereichs (E_{R}) extrapoliert bis zur Weg-Achse oder der Geraden an einem definierten Kraft-Wert übereinstimmt,
Erhöhen des Kraftsollwerts F_{Soll} um den mindestens einen Korrekturwert K, wenn eine Abweichung des Schnittpunkts SP von dem Referenzschnittpunkt R zu kleineren Weg-Werten einen größeren als den vorgegebenen Kopfüberstand oder eine größere als die vorbestimmte Restbodendicke beim Clinch-Vorgang anzeigt, und
Verringern des Kraftsollwerts F_{Soll} um den mindestens einen Korrekturwert K, wenn eine Abweichung des Schnittpunkts SP von dem Referenzschnittpunkt R zu größeren Weg-Werten einen zu tief geprägten Kopf des Stanzniets in der Mehrzahl von Blechen (14) oder eine kleinere als die vorbestimmte Restbodendicke beim Clinch-Vorgang anzeigt.

10. Steuerverfahren gemäß einem der Ansprüche 7 bis 9, in dem der Referenz-Kraft-Weg-Verlauf in einem über eine Stufe (S₁) getrennten ersten linearen Anstiegsbereich (L₁) und einen zweiten linearen Anstiegsbereich (L₂) eine Verformung der ersten Feder (7) des Niederhalters (13) und eine Verformung der zweiten Feder (6) des Niederhalters (13) darstellt, und das Verfahren als weiteren Schritt aufweist:
Bilden einer Differenz des Weg-Werts W_{RS, 0} der Stufe (S_{R, 1}) im Referenz-Kraft-Weg-Verlauf und des Weg-Werts W_{ES, 0} der Stufe (S₁) im erfassten Kraft-Weg-Verlauf, die eine Dicke der Mehrzahl von zu verbindenden Blechen (14) darstellt, und
Verschieben des Kraftsollwerts F_{Soll} zu einem korrigierten Kraftsollwert F_{Soll,k} in Abhängigkeit von der ermittelten Dicke der Mehrzahl von zu verbindenden Blechen (14).

11. Steuerverfahren gemäß einem der Ansprüche 7 bis 10, mit dem weiteren Schritt:
Bilden einer Differenz zwischen einem Anfangs-Weg-Wert S₀ eines nicht-linearen Anstiegsbereichs (NL) angrenzend an einen zweiten linearen Anstiegsbereich (L₂) und einem Start-Weg-Wert S₀₂ des angrenzenden zweiten linearen Anstiegsbereichs (L₂), der eine Länge des Fügeelements darstellt,
Vergleichen der ermittelten Länge des Fügeelements mit hinterlegten Nietlängen und
Abbrechen des Fügevorgangs, wenn die ermittelte Länge des Fügeelements die hinterlegte minimale Nietlänge unterschreitet oder die maximale Nietlänge überschreitet.

## Claims

1. A method for determining the quality of a joint fabricated in a plurality of metal sheets (14) by means of a joining device (F), said device comprising a drive element (1) in combination with a punch (9) which can be moved with it and a hold-down device (13) which can be moved with it, wherein the method has the following steps:
a. moving the drive element (1) in a mating direction (R_{F}), wherein the drive element (1) transfers the movement to the punch (9) and, via at least one first (7) and one second spring (6), to the hold-down device (13),
b. sensing of a force F applied by the drive element (1) and of a distance S covered by the drive element (1) during a movement of the drive element (1) in the mating direction (R_{F}) and opposite thereto as a force/displacement curve, and the method is **characterized in that**
c. the sensing of the force F applied by the drive element (1) is detected by a first sensor and of the distance S covered by the drive element (1) is detected by a second sensor, and
d. after the completion of a joining process, comparing a linear relief range (E₁) in the recorded force/displacement curve with a reference curve of the joining device (F), which can be determined as a reference force/displacement curve with the movement of the punch (9) and the hold-down device (13) via the drive element (1) toward and away from a counter-support (15) without metal sheets (14) arranged between and without a joining element, wherein the comparison ensures an evaluation of a head end position of a joining element or a remaining bottom thickness in the plurality of metal sheets (14).

2. The method according to Claim 1, wherein the linear relief range (E₁), upon a match when compared to a reference relief range (E_{R}), identifies a specified head end position of a punch rivet, in particular a flush head end position of a semi-hollow or solid punch rivet or a defined head end position of a semi-hollow or solid punch rivet with head contact, during setting of a punch rivet in the plurality of metal sheets (14) or a predefined remaining bottom thickness in a clinch process, with an arrangement of the linear relief range (E₁) displaced toward smaller displacement values compared to the reference relief range (E_{R}), a larger head projection than specified with reference to the plurality of metal sheets (14) or a greater remaining bottom thickness than predefined in a clinch process, and with an arrangement of the linear relief range (E₁) displaced toward larger displacement values compared to the reference relief range (E_{R}), a joining element pressed too deeply into the plurality of metal sheets (14) or a remaining bottom thickness smaller than predefined in a clinch process.

3. The method according to Claim 1, wherein a linear relief range (E₁) in the force/displacement curve extrapolated up to an intersection point SP with the displacement axis or a straight line to a defined force value represents a flush or specified head end position of a punch rivet during placement of a punch rivet in the plurality of metal sheets (14) or a specified remaining bottom thickness in a clinch process if the intersection point SP matches a reference intersection point R of the linear reference relief range (E_{R}) extrapolated to the displacement axis or to the straight line for a defined force value, representing with a deviation of the intersection point SP from the reference intersection point R toward smaller displacement values compared to the reference relief range (E_{R}) a larger head projection than specified with reference to the plurality of metal sheets (14) or a greater remaining bottom thickness than predefined in a clinch process, and representing with a deviation of the intersection point SP from the reference intersection point R displaced toward larger displacement values a joining element pressed too deeply into the plurality of metal sheets (14) or a remaining bottom thickness smaller than predefined in a clinch process.

4. The method according to one of the preceding claims, in which the reference force/displacement curve represents a deformation of the first spring (7) of the hold-down device (13) and a deformation of the second spring (6) of the hold-down device (13) in a first linear increase range (L₁) separated via a step (S₁) and in a second linear increase range (L₂), and the method has as a further step:
generating a difference of the displacement value W_{RS, 0} of the step (S_{R, 1}) in the reference force/displacement curve and the displacement value W_{ES, 0} of the step (S₁) in the recorded force/displacement curve, which represents a thickness of the plurality of metal sheets (14) to be joined.

5. The method according to Claim 4, with the further step of
generating a difference between an initial displacement value S₀ of a non-linear increase range (NL) bordering on a second linear increase range (L₂) and a starting displacement value S₀₂ of the bordering second linear increase range (L₂), which represents a length of the joining element.

6. The method according to Claim 5, with the further step of
comparing the determined length of the joining element with saved rivet lengths and
signaling a misaligned rivet or a non-specified rivet if the determined length of the joining element is shorter than that of the minimum rivet length stored or it is longer than the maximum rivet length.

7. A control method for joining a plurality of metal sheets (14) by means of a joining device (F), said device comprising a drive element (1) in combination with a punch (9) which can be moved with it and a hold-down device (13) which can be moved with it, and the method is **characterized by** the following steps:
a. specifying a maximum joining force with a force setpoint value Fₛₒₗₗ,
b. recording of a force F applied by the drive element (1) with a first sensor and of a distance covered by the drive element (1) with a second sensor during a movement of the drive element (1) in a mating direction (R_{F}) and opposite thereto as a force/displacement curve,
c. moving the drive element (1) in the mating direction (R_{F}), wherein the drive element (1) transfers the movement to the punch (9) and, via at least one first (7) and one second spring (6), to the hold-down device (13) until the force setpoint value Fₛₒₗₗ is reached, and after that moving the drive element (1) into an initial position,
d. offsetting the force setpoint value Fₛₒₗₗ by at least one correction value K after comparing a linear relief range (E₁) in the recorded force/displacement curve with a reference curve of the joining device (F), which can be determined as a reference force/displacement curve while moving the punch (9) and the hold-down device (13) via the drive element (1) toward and away from a counter-support (15) without metal sheets (14) arranged between and without a joining element, in order to achieve a specified head end position in a subsequent joining process during punch riveting or a predefined remaining bottom thickness in a clinch process.

8. The control method according to Claim 7, which further includes
maintaining the force setpoint value Fₛₒₗₗ if the linear relief range (E₁) matches the reference relief range (E_{R}),
increasing the force setpoint value Fₛₒₗₗ by the at least one correction value K if the linear relief range (E1) is displaced toward smaller displacement values compared to the reference relief range (E_{R}), and
reducing the force setpoint value Fₛₒₗₗ by the at least one correction value K if the linear relief range (E₁) is displaced toward larger displacement values compared to the reference relief range (E_{R}).

9. The control method according to Claim 7 or 8, with the further step of
maintaining the force setpoint value Fₛₒₗₗ if a linear relief range (E₁) in the force/displacement curve extrapolated up to an intersection point SP with the displacement axis or to a straight line at a defined force value representing the flush or specified head end position or the predefined remaining bottom thickness if the intersection point SP matches a reference intersection point R of the linear reference relief range (E_{R}) extrapolated to the displacement axis or to the straight line at a defined force value,
increasing the force setpoint value Fₛₒₗₗ by the at least one correction value K if a deviation of the intersection point SP from the reference intersection point R toward smaller displacement values indicates a greater head projection than specified or a larger remaining bottom thickness than specified in a clinch process, and
reducing the force setpoint value Fₛₒₗₗ by the at least one correction value K if a deviation of the intersection point SP from the reference intersection point R toward larger displacement values indicates a head of the punch rivet pressed too deeply into the plurality of metal sheets (14) or a remaining bottom thickness smaller than specified in a clinch process.

10. The control method according to one of Claims 7 to 9, in which the reference force/displacement curve represents a deformation of the first spring (7) of the hold-down device (13) and a deformation of the second spring (6) of the hold-down device (13) in a first linear increase range (L₁) separated via a step (S₁) and in a second linear increase range (L₂), and the method has as a further step:
generating a difference of the displacement value W_{RS, 0} of the step (S_{R, 1}) in the reference force/displacement curve and the displacement value W_{ES, 0} of the step (S₁) in the recorded force/displacement curve, which represents a thickness of the plurality of metal sheets (14) to be joined, and
offsetting of the force setpoint value Fₛₒₗₗ to a corrected force setpoint value F_{soll,k} as a function of the thickness determined for the plurality of metal sheets (14) to be joined.

11. The control method according to one of Claims 7 to 10, with the further step of
generating a difference between an initial displacement value S₀ of a nonlinear increase range (NL) bordering on a second linear increase range (L₂) and a starting displacement value S₀₂ of the bordering second linear increase range (L₂), which represents a length of the joining element,
comparing the determined length of the joining element with saved rivet lengths and
aborting the joining process if the determined length of the joining element is shorter than that of the minimum rivet length stored or it is longer than the maximum rivet length.

## Revendications

1. Procédé de détermination de la qualité d'un raccordement par assemblage réalisé dans une pluralité de tôles (14) à l'aide d'un dispositif d'assemblage (F) comportant un élément d'entraînement (1) en combinaison avec un poinçon (9) déplaçable avec celui-ci et avec un serre-flan (13) déplaçable avec celui-ci, le procédé présentant les étapes suivantes :
a. déplacement de l'élément d'entraînement (1) dans une direction d'assemblage (R_{F}), l'élément d'entraînement (1) transmettant le déplacement au poinçon (9) ainsi qu'au serre-flan (13) par le biais d'au moins un premier (7) et un deuxième ressort (6),
b. détection d'une force F appliquée par l'élément d'entraînement (1) et d'un trajet S parcouru par l'élément d'entraînement (1) pendant un déplacement de l'élément d'entraînement (1) dans et contre la direction d'assemblage (R_{F}) sous la forme d'une courbe force-trajet, et le procédé étant **caractérisé en ce que**
c. la force F appliquée par l'élément d'entraînement (1) est détectée à l'aide d'un premier capteur et le trajet S parcouru par l'élément d'entraînement (1) est détecté à l'aide d'un deuxième capteur, et
d. à l'issue du procédé d'assemblage, une région de décharge linéaire (E₁) dans la courbe force-trajet détectée est comparée avec une courbe de référence du dispositif d'assemblage (F), laquelle peut être déterminée comme courbe force-trajet de référence lors du déplacement du poinçon (9) et du serre-flan (13) par le biais de l'élément d'entraînement (1) vers un contre-palier (15) et à distance de celui-ci, sans tôles (14) intercalées et sans élément d'assemblage, la comparaison garantissant une évaluation d'une position d'extrémité de tête d'un élément d'assemblage ou d'une épaisseur de fond résiduelle dans la pluralité de tôles (14).

2. Procédé selon la revendication 1, dans lequel la région de décharge linéaire (E₁) en comparaison avec une région de décharge de référence (E_{R}) permet d'identifier, en cas de concordance, une position d'extrémité de tête prédéfinie d'un rivet auto-poinçonneur, en particulier une position d'extrémité de tête en affleurement d'un rivet auto-poinçonneur semi-creux ou plein ou une position d'extrémité de tête définie d'un rivet auto-poinçonneur semi-creux ou plein avec un support de tête, lors de l'insertion d'un rivet auto-poinçonneur dans la pluralité de tôles (14) ou une épaisseur de fond résiduelle prédéterminée lors d'une opération de rivetage, avec une disposition de la région de décharge linéaire (E₁) en décalage par rapport à des valeurs de trajet inférieures en comparaison avec la région de décharge de référence (E_{R}), un dépassement de tête plus grand que le dépassement prédéfini par rapport à la pluralité de tôles (14) ou une épaisseur de fond résiduelle plus grande que l'épaisseur prédéterminée lors d'une opération de rivetage, et avec une disposition de la région de décharge linéaire (E₁) en décalage par rapport à des valeurs de trajet plus grandes en comparaison avec la région de décharge de référence (E_{R}), un élément d'assemblage embouti trop profondément dans la pluralité de tôles (14) ou une épaisseur de fond résiduelle plus petite que l'épaisseur prédéfinie lors d'une opération de rivetage.

3. Procédé selon la revendication 1, dans lequel une région de décharge linéaire (E₁) dans la courbe force-trajet extrapolée jusqu'à un point d'intersection SP avec l'axe de trajet ou une droite à une valeur de force définie représente une position d'extrémité de tête en affleurement ou prédéfinie d'un rivet auto-poinçonneur lors d'une insertion d'un rivet auto-poinçonneur dans la pluralité de tôles (14) ou une épaisseur de fond résiduelle prédéterminée lors d'une opération de rivetage, lorsque le point d'intersection SP concorde avec un point d'intersection de référence R de la région de décharge de référence (E_{R}) extrapolée jusqu'à l'axe de trajet ou la droite à une valeur de force définie, lors d'un écart du point d'intersection SP par rapport au point d'intersection de référence R à des valeurs de trajet inférieures en comparaison avec la région de décharge de référence (E_{R}), représente un plus grand dépassement de tête que le dépassement prédéfini par rapport à la pluralité de tôles (14) ou une épaisseur de fond résiduelle plus grande que l'épaisseur prédéterminée lors d'une opération de rivetage, et lors d'un écart du point d'intersection SP par rapport au point d'intersection de référence R en décalage à des valeurs de trajet supérieures, représente un élément d'assemblage embouti trop profondément dans la pluralité de tôles (14) ou une épaisseur de fond résiduelle plus petite que l'épaisseur prédéfinie lors d'une opération de rivetage.

4. Procédé selon l'une des revendications précédentes, dans lequel la courbe force-trajet de référence représente une déformation du premier ressort (7) du serre-flan (13) et une déformation du deuxième ressort (6) du serre-flan (13) dans une première région croissante linéaire (L₁) et une deuxième région croissante linéaire (L₂) séparées par un échelon (S₁), et le procédé présentant l'étape supplémentaire suivante :
- formation d'une différence de la valeur de trajet W_{RS.0} de l'échelon (S_{R.1}) dans la courbe force-trajet de référence et de la valeur de trajet W_{ES.0} de l'échelon (S₁) dans la courbe force-trajet détectée, laquelle représente une épaisseur de la pluralité de tôles (14) à relier.

5. Procédé selon la revendication 4, avec l'étape supplémentaire suivante :
- formation d'une différence entre une valeur de trajet initiale S₀ d'une région croissante non linéaire (NL) adjacente à une deuxième région croissante linéaire (L₂) et une valeur de trajet initiale S₀₂ de la deuxième région croissante linéaire (L₂), laquelle représente une longueur de l'élément d'assemblage.

6. Procédé selon la revendication 5, avec l'étape supplémentaire suivante :
- comparaison de la longueur déterminée de l'élément d'assemblage avec des longueurs de rivet enregistrées, et
- signalisation d'un tourneur de rivet ou d'un rivet non prédéfini, lorsque la longueur déterminée de l'élément d'assemblage tombe en dessous de la longueur de rivet minimale enregistrée ou dépasse la longueur de rivet maximale.

7. Procédé de commande pour un raccordement d'une pluralité de tôles (14) à l'aide d'un dispositif d'assemblage (F) comportant un élément d'entraînement (1) en combinaison avec un poinçon (9) déplaçable avec celui-ci et avec un serre-flan (13) déplaçable avec celui-ci, et le procédé étant **caractérisé par** les étapes suivantes :
a. fixation d'une force d'assemblage maximale au-dessus d'une valeur théorique de force F_{Soll},
b. détection d'une force F appliquée par l'élément d'entraînement (1) à l'aide d'un premier capteur et d'un trajet S parcouru par l'élément d'entraînement (1) à l'aide d'un deuxième capteur pendant un déplacement de l'élément d'entraînement (1) dans et contre la direction d'assemblage (R_{F}) sous la forme d'une courbe force-trajet,
c. déplacement de l'élément d'entraînement (1) dans la direction d'assemblage (R_{F}), l'élément d'entraînement (1) transmettant le déplacement au poinçon (9) ainsi qu'au serre-flan (13) par le biais d'au moins un premier (7) et un deuxième ressort (6), jusqu'à ce que la valeur théorique de force F_{Soll} soit atteinte, puis déplacement de l'élément d'entraînement (1) vers une position initiale,
d. décalage de la valeur théorique de force F_{Soll} d'au moins une valeur de correction K après une comparaison d'une région de décharge linéaire (E₁) dans la courbe force-trajet avec une courbe de référence du dispositif d'assemblage (F), laquelle peut être déterminée comme courbe force-trajet de référence lors du déplacement du poinçon (9) et du serre-flan (13) par le biais de l'élément d'entraînement (1) vers un contre-palier (15) et à distance de celui-ci, sans tôles (14) intercalées et sans élément d'assemblage, afin d'atteindre, au cours d'une opération d'assemblage consécutive, une position d'extrémité de tête lors de la pose d'un rivet auto-poinçonneur ou une épaisseur de fond résiduelle lors d'une opération de rivetage.

8. Procédé de commande selon la revendication 7, comprenant en outre :
- le maintien de la valeur théorique de force F_{Soll} lorsque la région de décharge linéaire (E₁) concorde avec la région de décharge de référence (E_{R}),
- l'augmentation de la valeur théorique de force F_{Soll} selon l'au moins une valeur de correction K lorsque la région de décharge linéaire (E₁) est décalée à des valeurs de trajet inférieures en comparaison avec la région de décharge de référence (E_{R}), et
- la réduction de la valeur théorique de force F_{Soll} selon l'au moins une valeur de correction K lorsque la région de décharge linéaire (E₁) est décalée à des valeurs de trajet supérieures en comparaison avec la région de décharge de référence (E_{R}).

9. Procédé de commande selon la revendication 7 ou 8, comprenant en outre :
- le maintien de la valeur théorique de force F_{Soll} lorsqu'une région de décharge linéaire (E₁) dans la courbe force-trajet extrapolée jusqu'à un point d'intersection SP avec l'axe de trajet ou une droite à une valeur de force définie, représente la position d'extrémité de tête en affleurement ou prédéfinie ou l'épaisseur de fond résiduelle prédéterminée, lorsque le point d'intersection SP concorde avec un point d'intersection de référence R de la région de décharge linéaire de référence (E_{R}) extrapolée jusqu'à l'axe de trajet ou la droite à une valeur de force définie,
- l'augmentation de la valeur théorique de force F_{Soll} selon l'au moins une valeur de correction K lorsqu'un écart du point d'intersection SP par rapport au point d'intersection de référence R à des valeurs de trajet inférieures indique un dépassement de tête plus grand que le dépassement prédéfini ou une épaisseur de fond résiduelle plus grande que l'épaisseur prédéterminée lors d'une opération de rivetage, et
- la réduction de la valeur théorique de force F_{Soll} selon l'au moins une valeur de correction K lorsqu'un écart du point d'intersection SP par rapport au point d'intersection de référence R à des valeurs de trajet supérieures indique une tête de rivet auto-poinçonneur emboutie trop profondément dans la pluralité de tôles (14) ou une épaisseur de fond résiduelle plus petite que l'épaisseur prédéterminée lors d'une opération de rivetage.

10. Procédé de commande selon l'une des revendications 7 à 9, dans lequel la courbe force-trajet de référence représente une déformation du premier ressort (7) du serre-flan (13) et une déformation du deuxième ressort (6) du serre-flan (13) dans une première région croissante linéaire (L₁) et une deuxième région croissante linéaire (L₂) séparées par un échelon (S₁), et le procédé présentant l'étape supplémentaire suivante :
- formation d'une différence de la valeur de trajet W_{RS.0} de l'échelon (S_{R.1}) dans la courbe force-trajet de référence et de la valeur de trajet W_{ES.0} de l'échelon (S₁) dans la courbe force-trajet détectée, laquelle représente une épaisseur de la pluralité de tôles (14) à relier, et
- décalage de la valeur théorique de force F_{Soll} à une valeur théorique de force corrigée F_{Soll.k} en fonction de l'épaisseur déterminée de la pluralité de tôles (14) à relier.

11. Procédé de commande selon l'une des revendications 7 à 10, avec l'étape supplémentaire suivante :
- formation d'une différence entre une valeur de trajet initiale S₀ d'une région croissante non linéaire (NL) adjacente à une deuxième région croissante linéaire (L₂) et une valeur de trajet initiale S₀₂ de la deuxième région croissante linéaire (L₂), laquelle représente une longueur de l'élément d'assemblage,
- comparaison de la longueur déterminée de l'élément d'assemblage avec des longueurs de rivet enregistrées, et
- arrêt de l'opération d'assemblage lorsque la longueur déterminée de l'élément d'assemblage tombe en dessous de la longueur de rivet minimale enregistrée ou dépasse la longueur de rivet maximale.
